# EUROPEAN PATENT SPECIFICATION

(11) **EP 1 138 891 B1**
(45) Date of publication and mention of the grant of the patent: **22.02.2006**
(21) Application number: 01107912.6
(22) Date of filing: 28.03.2001
(51) Int. Cl.: F01N 3/20, F01N 3/08, F02D 41/02, F02D 21/08, F02D 41/40, F02M 25/07, F02B 37/18, F01N 7/10

(54) **Exhaust emission control system of internal combustion engine**
Abgasemissions-Steuerungssystem für eine Brennkraftmaschine
Système de commande des émissions pour l'échappement d'un moteur à combustion interne

(30) Priority: 31.03.2000 JP 2000097635; 18.09.2000 JP 2000282511
(43) Date of publication of application: 04.10.2001
(73) Proprietor: Toyota Jidosha Kabushiki Kaisha, Toyota-shi, Aichi 471-8571 (JP)
(72) Inventor: Tsukasaki, Yukihiro, Toyota-shi, Aichi-ken, 471-8571 (JP); Matsushita, Souichi, Toyota-shi, Aichi-ken, 471-8571 (JP); Hayashi, Kotaro, Toyota-shi, Aichi-ken, 471-8571 (JP); Ishiyama, Shinobu, Toyota-shi, Aichi-ken, 471-8571 (JP); Oba, Takahiro, Toyota-shi, Aichi-ken, 471-8571 (JP); Tahara, Jun, Toyota-shi, Aichi-ken, 471-8571 (JP); Shibata, Daisuke, Toyota-shi, Aichi-ken, 471-8571 (JP); Negami, Akihiko, Toyota-shi, Aichi-ken, 471-8571 (JP); Endo, Motoshiro, Toyota-shi, Aichi-ken, 471-8571 (JP); Masuda, Michihiko, Toyota-shi, Aichi-ken, 471-8571 (JP)
(74) Representative: TBK-Patent

(56) References cited:
- DE-A- 19 914 787
- DE-C- 19 806 265
- DE-C- 19 919 426
- PATENT ABSTRACTS OF JAPAN vol. 018, no. 323 (M-1624), 20 June 1994 (1994-06-20) & JP 06 074022 A (ISUZU MOTORS LTD), 15 March 1994 (1994-03-15)

## Description

### BACKGROUND OF THE INVENTION

The present invention relates generally to an exhaust emission control system for purging toxic components from an exhaust gas discharged from an internal combustion engine, and more particularly to an exhaust emission control system of an internal combustion engine, for supplying a reducer to an upstream side of a reduction catalyst provided in an exhaust system of the internal combustion engine capable of performing a lean combustion, and for furthering the purge of toxic components out of the exhaust gas.

In a diesel engine and a gasoline engine of performing the lean combustion, a large proportion of entire operation area is occupied by an operation region in which the engine operates by supplying a mixture exhibiting a high air/fuel ratio (lean atmosphere) for the combustion. In this type of engine (internal combustion engine), an exhaust system is generally provided with a NOx absorbent (catalyst) for absorbing nitride oxide (NOx) under an existence of oxygen.

What is known as a typical NOx catalyst may be, for example, an storage reduction type NOx catalyst and a selective reduction type NOx catalyst.

The storage reduction type NOx catalyst has a characteristic of absorbing NOx under a condition that a concentration of oxygen in the exhaust gas is high and releasing NOx under a condition that the concentration of oxygen in the exhaust gas is low. NOx released into the exhaust gas, if reducing components such as hydrocarbon (HC) and carbon monoxide (CO) exist in the exhaust gas, soon reacts with these reducing components and is reduced into nitrogen (N₂). Further, the storage reduction type NOx catalyst, if absorbing a predetermined limit quantity of NOx and retaining this state (absorption), absorbs no further NOx even under the condition that the oxygen concentration in the exhaust gas is high. Then, according to the internal combustion engine including the exhaust system provided with the storage reduction type NOx catalyst described above, before a NOx absorbed quantity of the same catalyst reaches to the limit quantity, it is general that NOx absorbed in the catalyst is released and reduction-purged by adding a reducer into the exhaust system, and the control for restoring a NOx absorbing capability of the catalyst is repeated at a predetermined interval.

By contrast, the selective reduction type NOx catalyst has a characteristic of reacting the reducing component and NOx existing in the exhaust gas with each other under the condition that the oxygen concentration in the exhaust gas is high and the reducing components such as hydrocarbon (HC) exist, and purifying the exhaust gas into nitrogen (N₂), water (H₂O) and carbon dioxide (CO₂). Therefore, in the internal combustion engine with the selective reduction type NOx catalyst provided in the exhaust system, it is a general practice that NOx existing in the exhaust gas is purged therefrom by continuously adding the reducer into the exhaust system during the operation of the engine.

According to the internal combustion engine where NOx is reduced and purged from the exhaust gas by adopting the NOx catalyst, whether the storage reduction type NOx catalyst or the selective reduction type NOx catalyst is adopted, it is required that a predetermined quantity of reducer be supplied to the upstream side of the NOx catalyst in the exhaust system at a desired timing.

For example, a system disclosed in Japanese Patent Application Laying-Open Publication No.6-74022 takes such a construction that the reducer pressure-supplied via a predetermined passageway into the exhaust gas flowing into the NOx catalyst, is injection-supplied by a desired quantity by use of an opening/closing controllable injection valve.

As in the case of the system disclosed in the above Publication, the system constructed to control the function of the NOx catalyst by properly injection-supplying the reducer into the exhaust gas has not alternative but to adopt a system structure in which the injection port for the reducer is exposed directly to the exhaust gas passageway. Hence, the same injection port and a reducer flow path in the vicinity of the injection port are easy to be heated by a high-temperature exhaust gas.

Therefore, the heated reducer is carbonized enough to cause clogging in the injection port for the reducer, or to lock the injection valve, with the result that the reducer can not be jetted out, or an injection quantity and an injection timing can not be controlled in some cases.

On the other hand, there is an exhaust gas recirculation device (which will hereinafter abbreviated to an EGR device) as one of devices for decreasing NOx contained in the exhaust gas discharged from the internal combustion engine: The EGR device functions to decrease an occurrence of NOx by recirculating some of the exhaust gas back to an intake system, increasing a thermal capacity of an intra combustion chamber gas with an introduction of an inert gas, and lowering a maximum combustion temperature.

Unlike the NOx catalyst function of purging NOx produced, the EGR device has a function of restraining the occurrence itself of NOx.

Then, for attaining a more effective decrease of NOx contained in the exhaust gas discharged from the engine, as in the case of the system disclosed in, e.g., Japanese Patent Application Laying-Open Publication No.6-74022, an exhaust emission control system constructed by combining the NOx catalyst with the EGR device is adopted.

The system disclosed in the above Publication takes such an passage geometry that exhaust branch pipes connected to exhaust ports of the respective cylinder of a four-cylinder engine are downstream converged into one single exhaust pipe and thus guided to the NOx catalyst. Then, only three lengths of branch pipes among those four lengths of exhaust branch pipes are connected to an EGR pipe (EGR passageway). On the other hand, a reducer adding nozzle is fitted to an exhaust port corresponding to the remaining exhaust branch pipe. Namely, some of the exhaust gas derived from only the tree cylinders is flowed back to the intake pipe via the EGR pipe on one hand, and the exhaust gas derived from one remaining cylinder is introduced directly into the NOx catalyst disposed downstream without via the EGR pipe . Further, the fuel (reducer) is added into only the exhaust gas introduced directly into the NOx catalyst disposed downstream without via the EGR pipe. According to the system architecture described above, the reducer added from the reducer adding nozzle is taken into the intake system via the EGR pipe, there comes to no influence exerted on a combustion state of the engine, and the exhaust characteristic can be preferably held.

In the engine disclosed in the same Publication, however, the EGR pipe is connected to the three (plural) lengths of branch pipes, and normally the connections therebetween is made by welding as a connecting method. This method is, however, disadvantageous in terms of involving more of welding portions with an increase in cost and less durability due to a higher probability of being damaged.

Further, if a large number of branch pipes connected to the EGR pipe, there is a large influence of an exhaust-pulse with respect to a flow of EGR gas, and a drawback is that it is difficult to precisely control an EGR gas flow rate.

It is an object of the present invention to provide an exhaust emission control system of an internal combustion engine that is capable of controlling a function of a NOx catalyst by injection-supplying a reducer directly into an exhaust system of the internal combustion engine, and stably supplying a desired quantity of reducer at a desired timing without being influenced by the heat derived from the exhaust gas.

The present invention further intends to provide an exhaust emission control system of an internal combustion engine including an EGR device and the NOx catalyst, which is capable of preventing the reducer added for the NOx catalyst from flowing round into an EGR passageway , enhancing the durability and decreasing costs.
Document DE 199 19 426 C1 discloses an exhaust emission control system of an internal combustion engine provided in a cylinder head formed with an exhaust port of said internal combustion engine and having a reducer injection nozzle for injecting a reducer. Furthermore, the system comprises temperature rise restraining means for restraining a rise in temperature of a passageway for the reducer formed extending throughout an interior of said reducer injection nozzle from an injection port. In this way it is possible to cool down the reducer and to prevent the reducer from changing chemically due to the high temperature.

### SUMMARY OF THE INVENTION

In order to solve the above object, the present invention discloses on exhaust emission contrast system according to claim. Advantageous features are subject-matter of the dependent claims. According to one aspect of the present invention, an exhaust emission control system of an internal combustion engine is provided in an outer shell member formed with an exhaust port of the internal combustion engine, and has a reducer injection nozzle for injecting a reducer into the exhaust port. This exhaust emission control system comprises a temperature rise restraining member for restraining a rise in temperature of a passageway, for the reducer, formed extending throughout an interior of the reducer injection nozzle from an injection port thereof.

According to one aspect of the present invention, there are preferably restrained clogging in the injection port of the reducer injection nozzle ad in the internal passageway, which is caused due to a thermal denaturation of the reducer, and a deterioration of a valve structure inside the reducer injection nozzle. Hence, the function of the reducer injection nozzle for injection-supplying the desired quantity of reducer at the desired timing, can be held with a high accuracy for a long period of time.

The temperature rise restraining member preferably includes a structural member forming a part of the outer shell member, covering at least a part of exposed portion of the reducer injection nozzle to the exhaust port, and configuring a passageway communicating with between the injection port of the reducer injection nozzle and the exhaust port.

According to one aspect of the present invention, the reducer injection nozzle is not exposed inside the exhaust port, and therefore the heat of the exhaust gas does not conduct directly to the reducer injection nozzle, whereby a rise in temperature of an interior of the reducer injection nozzle is preferably restrained. Further, a flow of the exhaust gas within the exhaust port is kept in a stable state without disturbing the flow of the exhaust gas a protrusion of the front end member of the reducer adding nozzle into the exhaust port.

It is also preferable that at least a part of the temperature rise restraining member is composed of a material exhibiting a higher coefficient of thermal conductivity than a material of the outer shell member forming the exhaust port, and covers at least a part of the outer surface of the reducer injection nozzle.

According to one aspect of present invention, a part of the temperature rise restraining member composed of the material exhibiting the higher coefficient of thermal conductivity than the material of the outer shell member forming the exhaust port, efficiently absorbs the heat transferred towards the outer edge of the reducer injection nozzle from the exhaust port, and releases the heat into a peripheral area, thereby preferably decreasing a heat absorption quantity of the reducer injection nozzle.

It is preferable that the temperature rise restraining member includes a passageway for a cooling medium in the vicinity of a portion composed of a material exhibiting a higher coefficient of thermal conductivity than that of the material of the outer shell member forming the exhaust port, and the cooling medium absorbs the heat contained in the portion composed of the material exhibiting the higher coefficient of thermal conductivity.

Note that a projection plane (range)of the passageway extending toward the axial core of the reducer injection nozzle preferably embraces substantially a position, closest to the passageway to the cooling medium, of a portion composed of the material exhibiting the higher coefficient of thermal conductivity than the material of the outer shell member formed with the exhaust port.

According to one aspect of the present invention, the cooling medium within the passageway preferably absorbs the heat of the reducer injection nozzle or the heat peripheral thereto through the portion composed of the material exhibiting the higher coefficient of thermal conductivity, thereby preferably restraining the rise in temperature of the reducer injection nozzle.

The temperature rise restraining member preferably includes a passageway for the cooling medium, formed in such a way that a part of outer peripheral surface of the reducer injection nozzle configures a part of an internal wall of the passageway.

According to one aspect of the present invention, it is feasible to efficiently cool off the whole or a local area inside the reducer injection nozzle from its outer peripheral surface.

According to another aspect of the present invention, an exhaust emission control system of an internal combustion engine, comprises an exhaust manifold connected to an exhaust port of each of cylinders of a multi-cylinder internal combustion engine capable of a lean combustion, an exhaust gas converging pipe for connecting the exhaust manifold to an exhaust pipe, an exhaust gas recirculation device for recirculating a part of exhaust gas to an intake system by connecting the exhaust manifold to the intake system of the internal combustion engine, a NOx catalyst provided in the exhaust pipe, and a reducer adding device for adding a reducer into an exhaust system disposed more upstream than the NOx catalyst. In this control system, an upstream end of the exhaust gas converging pipe is connected to one end of the exhaust manifold, an adding port of the reducer adding device is provided facing to the exhaust port of the cylinder positioned in close proximity to one end of the exhaust manifold, and an exhaust gas intake port of the exhaust gas recirculation device is provided on the side of the other end of the exhaust manifold.

According to the other aspect of the present invention, the connecting point of the exhaust gas converging pipe with respect to the exhaust manifold and the connecting point of the exhaust gas intake port of the exhaust gas recirculation device, are spaced away from each other. Further, the adding port of the reducer adding device is positioned facing to the exhaust port in the vicinity of the connecting point of the exhaust gas converging pipe with respect to the exhaust manifold. It is therefore possible to prevent the reducer added by the reducer adding device from flowing round into the intake system through the exhaust gas recirculation device. Hence, the emission of smokes can be prevented. Moreover, the exhaust manifold is connected at one point to the exhaust gas, thereby enhancing the durability and decreasing the costs.

It is also preferable that the exhaust port of the cylinder fitted with the adding portion of the reducer adding device narrows down in section at a portion provided with the adding port.

According to the other aspect of the present invention, a flow of the exhaust gas flowing through the exhaust port is accelerated, and an attainment of fine particles of the reducer added from the reducer adding device is furthered. Hence, a purging efficiency of the NOx catalyst is enhanced.

Preferably, the reducer is added from the adding portion of the reducer adding device during a valve open period of the exhaust valve of the cylinder positioned in close proximity to one end of the exhaust manifold.

According to the other aspect of the present invention, the reducer added from the reducer adding device can be restrained from being adhered to the exhaust manifold, and the fuel adhered to the exhaust manifold can be restrained from flowing round into the intake system through the exhaust gas recirculation device.

As far as the cylinder fitted with the adding port of the reducer adding device is concerned, after executing a main injection for injecting the fuel in order to obtain an engine output from a fuel injection valve, the control may be done to execute an auxiliary injection for injecting the fuel from the fuel injection valve at an expansion stroke or an exhaust stroke.

According to the other aspect of the present invention, the fuel supplied by the auxiliary injection increases the temperature of exhaust gas, thereby furthering the fine particles of fuel added from the reducer adding device and vaporization thereof.

The exhaust emission control system may further comprise a turbocharger provided down stream of the exhaust gas converging pipe for pressurizing a suction air and a bypass passageway for guiding the exhaust gas to the NOx catalyst so as to bypass the turbocharger when the reducer adding device adds the reducer under small load conditions.

When the exhaust gas produced in a small-load operating region in which the temperature of the exhaust gas is normally low flows through the turbocharger, the temperature of the exhaust gas becomes much lower, which may be an obstacle against the vaporization and the attainment of the fine particles of reducer added from the reducer adding device. With this contrivance applied, when the exhaust gas flows to the bypass passageway to bypass the turbocharger and is guided to the NOx catalyst, a decrease in the temperature due to the action of the turbocharger does not occur, and hence the obstacle against the attainment of the fine particles of reducer and the vaporization thereof disappears, thereby enhancing the NOx purging rate.

A second reducer adding device for supplying the reducer to the NOx catalyst when restoring the NOx catalyst from sulfur poisoning, may be provided upstream of the NOx catalyst.

According to the other aspect of the present invention, the reducer added from the second reducer adding device does not flow round into the intake system through the exhaust gas recirculation device, and it is therefore feasible to prevent the emission of smokes due to the addition of the reducer for a sulfur poisoning restoration process.

### BRIEF DESCRIPTION OF THE DRAWINGS

FIG. 1 is a diagram showing an outline of a diesel engine system in a first embodiment of the present invention;
FIG. 2 is a partial sectional view schematically showing a fuel adding nozzle fitted to a cylinder head of an engine in the first embodiment as well as showing a sectional structure of its peripheral portion;
FIG. 3 is a partially enlarged sectional view showing in details an internal structure of the fuel adding nozzle;
FIG. 4 is a sectional view showing a state where the fuel adding nozzle fitted to the cylinder head jets out the fuel toward an exhaust port in the first embodiment;
FIG. 5 is a sectional view showing a state where the fuel adding nozzle fitted to the cylinder head jets out the fuel toward the exhaust port in a modified example of the first embodiment;
FIG. 6 is a sectional view showing a state where the fuel adding nozzle fitted to the cylinder head jets out the fuel toward the exhaust port in a second embodiment;
FIG. 7 is a sectional view showing a state where the fuel adding nozzle fitted to the cylinder head jets out the fuel toward the exhaust port in a modified example of the second embodiment;
FIG. 8 is a sectional view showing a state where the fuel adding nozzle fitted to the cylinder head jets out the fuel toward the exhaust port in a third embodiment;
FIG. 9 is a diagram showing an outline of configuration of a diesel engine system in a fourth embodiment of the present invention;
FIG. 10 is a sectional view showing the vicinity of the exhaust port of the engine in a fifth embodiment of the present invention;
FIG. 11 is a flowchart showing a fuel add control procedure in the fifth embodiment;
FIG. 12 is a diagram showing an outline of configuration of the diesel engine system in a sixth embodiment of the present invention;
FIG. 13 a flowchart showing an exhaust gas bypass control procedure in the sixth embodiment;
FIG. 14 is a diagram showing an outline of configuration of the diesel engine system in a seventh embodiment of the present invention; and
FIG. 15 is a flowchart showing a SOx poisoning restoration procedure in the seventh embodiment.

### DESCRIPTION OF THE PREFERRED EMBODIMENTS

### (Embodiment 1)

An exhaust emission control system of an internal combustion engine according to the present invention will hereinafter be described by way of a first embodiment in which the present invention is applied to a diesel engine system.

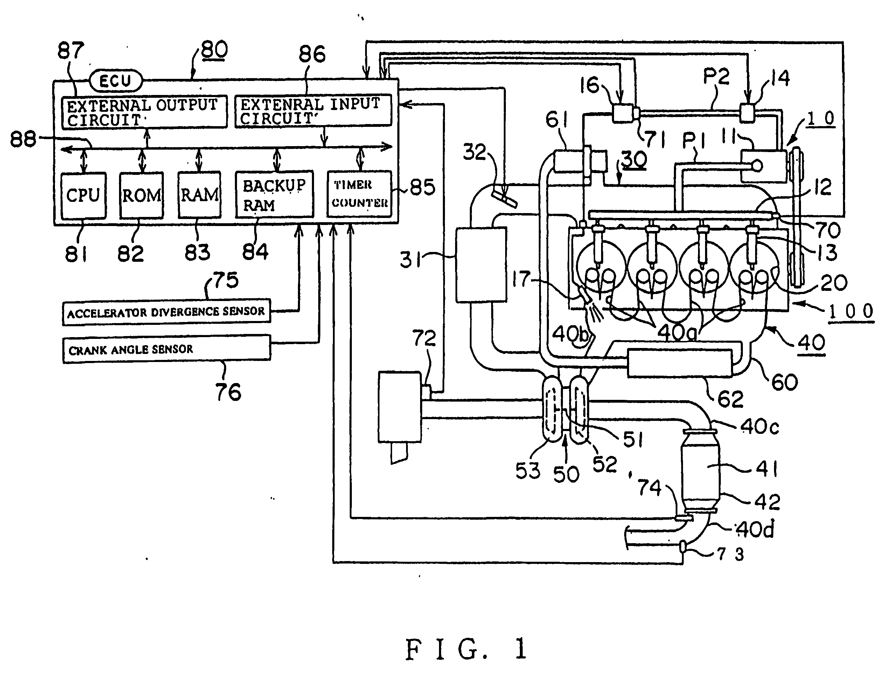

Referring first to FIG. 1, an internal combustion engine (which will hereinafter be simply called an engine) 100 may be classified as a straight four-cylinder diesel engine system configured mainly by a fuel supply system 10, a combustion chamber 20, an intake system 30 and an exhaust system 40.

To start with, the fuel supply system 10 is constructed of a fuel pump 11, a pressure accumulation chamber 12, a fuel injection valve 13, a shut-off valve 14, a control valve 16, a fuel adding nozzle 17, an engine fuel passageway P1 and an added fuel passageway P2.

The fuel pump 11 pumps up a fuel from a fuel tank (not shown) and, after highly pressurizing the fuel thus pumped up, supplies the high-pressure fuel to the pressure accumulation chamber 12 via the engine fuel passageway P1. The pressure accumulation chamber 12 has a function of keeping the high-pressure fuel supplied from the fuel pump 11 at a predetermined pressure (pressure accumulation), and distributes the pressure-accumulated fuel to each of the fuel injection valves 13. The fuel injection valve 13 is classified as an electromagnetic valve incorporating an electromagnetic solenoid (unillustrated), and properly opens to supply the fuel by injection into an interior of the combustion chamber 20.

On the other hand, the fuel pump 11 supplies the fuel adding nozzle (a reducer injection nozzle) 17 with a part of the fuel pumped up from the fuel tank via the added fuel passageway P2. The shut-off valve 14 and the control valve 16 are disposed sequentially from the fuel pump 11 toward the fuel adding nozzle 17 along the added fuel passageway P2. The shut-off valve 14 shuts off the added fuel passageway P2 when an emergency occurs, thereby stopping the fuel supply. The control valve 16 controls a pressure of the fuel (fuel pressure) supplied to the fuel adding nozzle 17. The fuel adding nozzle 17 is a mechanical switching valve that opens when given the fuel pressure equal to or higher than a predetermined pressure (e.g., 0.2 MPa) and supplies the fuel by injection into the exhaust system 40 (an exhaust port 40a). namely, the control valve 16 controls the fuel pressure existing upstream of the fuel adding nozzle 17, thereby injection-supplying (adding) the desired fuel from the fuel adding nozzle 17 at a proper timing.

The intake system 30 forms a passageway for intake air (which is called an intake passageway) supplied into each combustion chamber 20. On the other hand, the exhaust system 40 is configured by a variety of passageway members such as an exhaust port 40a, an exhaust manifold 40b, a catalyst upstream passageway 40c and a catalyst downstream passageway 40d, which are connected in sequence from an upstream side toward a downstream side, thus forming a passageway for the exhaust gas (which is termed an exhaust passageway) discharged from each combustion chamber 20.

Further, the engine 100 is provided with a well-known supercharger (turbocharger) 50. The turbocharger 50 includes two pieces if turbine wheels 52, 53 connected to each other via a shaft 51. On the other hand, the turbine wheel (intake-side turbine wheel) 52 is exposed to the suction air within the intake system 30, while the turbine wheel (exhaust-side turbine wheel) 53 is exposed to the suction air within the exhaust system 40. The thus constructed turbocharger 50 rotates the intake-side turbine wheel 52 by making use of an exhaust gas flow (exhaust pressure) receiving the exhaust-side turbine wheel 53, thereby performing so-called surpercharging of boosting the intake pressure.

In the intake system 30, an inter cooler 31 provided for the turbocharger 50 forcibly cools off the suction air of which a temperature is raised by supercharging. A throttle valve 32 provided more downstream than the inter cooler 31 is categorized as an electronic control type switching valve capable of making a stepless adjustment of its aperture. The throttle valve 32 Incorporates function of adjusting (reducing) a quantity of supply of the suction air by throttling a flow area of the suction air under a predetermined condition.

Further, the engine 100 is formed with an exhaust gas recirculation (EGR) passageway 60 for bypassing the upstream route (the intake system 30) and the downstream route (the exhaust system 40) of the combustion chamber 20. This EGR passageway 60 has a function of properly recirculating a part of the exhaust gas back to the intake system 30. The EGR passageway 60 is provided with an EGR valve 61 and an EGR cooler 62. The EGR valve 61 is capable of controlling a flow rate of the exhaust gas flowing through the EGR passageway 60. The EGR cooler 62 serves to cool off the exhaust gas passing (recirculating) through the EGR passageway 60.

Moreover, in the exhaust system 40, a catalyst casing 42, which encases an storage reduction type NOx catalyst (that will hereinafter simply called a catalyst) 41, is provided downstream (between the catalyst upstream passageway 40c and the catalyst downstream passageway 40d) of the exhaust-side turbine wheel 53. The catalyst 41 encased in the catalyst casing 42 is structured such that for example, alumina (Al₂O₃) is used as a carrier, and alkali metals such as potassium (K), sodium (Na) lithium (Li) and cesium (Cs), alkali earth such as barium (Ba) and calcium, rare earth such as lanthanum (La), yttrium (Y), and a precious metal like platinum (Pt), are supported on this carrier.

The catalyst 41 absorbs NOx in a state where the exhaust gas contains a large quantity of oxygen. In a state where a concentration of oxygen in the exhaust gas is low and a large quantity of reduction component (e.g., a unburned component (HC) of the fuel) exists, the catalyst 41 reduces NOx into NO₂ or NO, thus releasing this component. NOx released in the form of NO₂ or NO promptly reacts with HC and CO existing in the exhaust gas and is thereby further reduced into N₂. HC and CO, with NO₂ and NO being reduced, are oxidized themselves into H₂O and CO₂. Namely, it follows that the exhaust gas can be purged of HC, CO and NOx by properly adjusting the HC component and the concentration of oxygen in the exhaust gas introduced into the catalyst casing 42 (catalyst 41).

In the engine 100, an addition quantity of the fuel added to the upstream side of the catalyst 41 in the exhaust system 40 via through the fuel adding nozzle 17 and an addition timing, are controlled, thereby adjusting the HC component and the concentration of oxygen in the exhaust gas introduced into the catalyst 41. That is, in accordance with the embodiment 1, the catalyst 41 provided in the exhaust system 40, the fuel adding nozzle 17 for controlling the components in the exhaust gas introduced into the catalyst 41 and further the fuel supply system 10 for pressure-supplying the fuel with the aid of this fuel adding nozzle 17, cooperate to function as the exhaust emission control system for purifying the exhaust gas of the engine 100.

On the other hand, a variety of sensors are attached to the respective components of the engine 100, and output signals related to environment conditions of those components and to operating states of the engine 100.

To be specific, a rail pressure sensor 70 outputs a detection signal corresponding to a fuel pressure accumulated in the pressure accumulation chamber 12. A fuel pressure sensor 71 outputs a detection signal corresponding to a pressure (fuel pressure) Pg of the fuel introduced into the control valve 16. An airflow meter 72 outputs a detection signal corresponding to a flow rate (intake quantity) of the suction air flowing downstream of the throttle valve 32 in the intake system 30. An air-fuel ratio (A/F) sensor 73 outputs a detection signal consecutively changing corresponding to the concentration of the oxygen in the exhaust gas existing downstream of the catalyst casing 42 in the exhaust system 40. An exhaust gas temperature sensor 74 similarly outputs a detection signal corresponding to a temperature (exhaust temperature) Te of the exhaust gas flowing downstream of the catalyst casing 42 in the exhaust system 40.

Further, an accelerator divergence sensor 75 is attached to an accelerator pedal (unillustrated) and outputs a detection signal corresponding to a pedaling quantity Acc. A crank angle sensor 76 outputs a detection signal (pulse) each time an output shaft (crank shaft) of the engine 100 rotates through a predetermined angle. Those sensors 70 - 76 are electrically connected to an electronic control unit (ECU) 80.

The ECU 80 includes a central processing unit (CPU) 81, a read-only memory (ROM) 82, a random access memory'(RAM) 83, a backup RAM 84 and a timer counter 85, and further a logical arithmetic circuit. These components 81 - 85, an external input circuit 86 including an A/D converter, and external output circuit 87 are connected to each other via a bidirectional bus 88, thereby configuring the above logical arithmetic circuit.

The thus constructed ECU 80 inputs the detection signals of the variety of sensors via the external input circuit, and, based on those signals, executes the basic control of the engine 100 such as controlling the fuel injection etc. In addition, the ECU 80 executes various sorts of control of the operation of the engine 100 such as controlling an addition of the reducer (fuel) related to determinat.ions of the add timing of adding the reducer (which is the fuel functioning as the reducer) and of a supply quantity, and so on.

Next, an outline of the basic principle of the fuel addition executed by the ECU 80, will be explained.

Generally in the diesel engine, the oxygen concentration of a mixture of the fuel and the air that are supplied for burning in the combustion chamber, is high in almost all operation regions.

Normally, the oxygen concentration of the mixture supplied to the combustion, with a subtraction of the oxygen supplied for the combustion, reflects directly in a concentration of the oxygen in the exhaust gas. If the oxygen concentration (air/fuel ratio) in the mixture is high, the oxygen concentration (air/fuel ratio) in the exhaust gas is basically similarly high. On the other hand, as discussed above, the storage reduction type NOx catalyst has a characteristic of absorbing NOx if the oxygen concentration in the exhaust gas is high, and, if low, reducing the NOx into NO₂ or NO and thus releasing it. Therefore, as far as the oxygen in the exhaust gas remains in the high-concentration state, the catalyst absorbs NOx. There exists a limit in a NOx absorption quantity of the catalyst, and, in a state where the same catalyst absorbs the limit quantity of NOx, it follows that NOx in the exhaust gas is not absorbed but passes intact through the catalyst casing.

Such being the case, in the internal combustion engine including the fuel adding nozzle 17 as in case of the engine 100, the oxygen concentration is temporarily decreased and the reduction component quantity (of HC etc) is increased by adding the fuel to the upstream side of the catalyst 41 in the exhaust system 40 through the fuel adding nozzle 17 at a proper timing. Then, the catalyst 41 reduces NOx absorbed so far into NO₂ or NO and releases this substance, thereby coming to restore (regenerate) its own NOx absorbing capability. As described above NO2 or NO released immediately reacts with HC and CO and is thereby reduced into N₂.

At this time, a reduction-purging efficiency of the catalyst 41 for reduction-purging NOx absorbed by itself while releasing the reduced substance in the mode described above, is determined by the oxygen concentration (the air/fuel ratio) and the reduction component quantity (the concentration of oxygen) in the exhaust gas flowing into the catalyst casing 42.

Then, in the engine 100, the fuel addition (fuel add control) to the exhaust system 40 is carried out so that the optimum reduction component quantity in the exhaust gas and the optimum air/fuel ratio can be obtained with a stability.

Next, the fuel-adding nozzle 17, attached to the cylinder head of the engine 100, for properly injection-supplying the fuel fed via the added fuel passageway P2 into the exhaust system 40 (the exhaust port 40a) of the engine 100, will be explained in grwater details together with a structure of the peripheral portion.

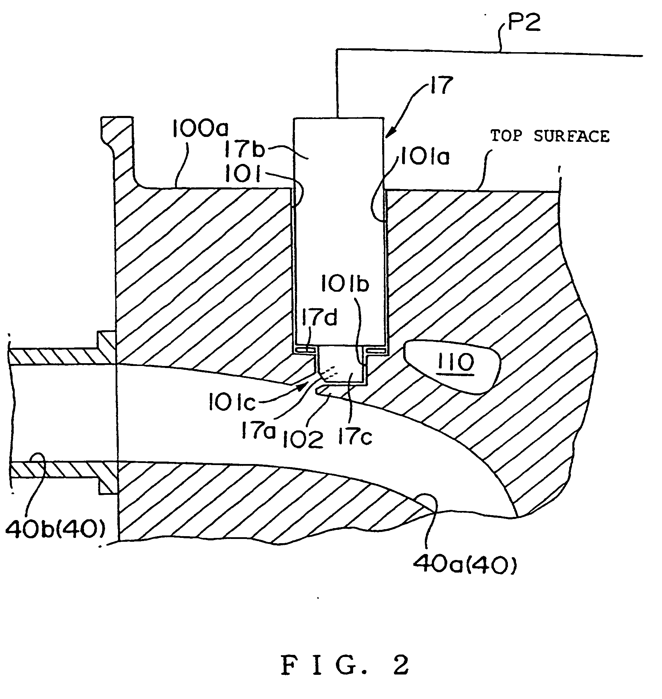

FIG. 2 is a partial sectional view schematically showing the fuel adding nozzle 17 attached to the cylinder head of the engine 100 together with a sectional structure of its peripheral portion.

As shown in FIG. 2, the exhaust port 40a serving as a most upstream member of the exhaust system 40 is formed inside throughout the cylinder head (outer shell member) 1a of the engine 100. An opening end, disposed upstream, of the exhaust port 40a communicates with the combustion chamber 20 (see FIG. 1) . An opening end, disposed downstream, of the same port 40a communicates with an upstream-side opening end of the exhaust manifold 40b. The fuel adding nozzle 17 is fitted into a fitting bore 101 formed in the cylinder head 1a, and is thus fitted so that its fuel injection hole 17a is directed toward inside the exhaust port 40a.

The fuel adding nozzle 17 takes such a configuration that a cylindrical drum member 17b and a cylindrical front end member 17c having an outside diameter smaller than the drum member 17b are coaxially formed in continuity. The front end member 17c has an oblique surface formed by cutting off a part of this member 17c from its bottom surface (on the side of the exhaust port) toward a side peripheral surface thereof. An opening of the injection port, i.e., the injection hole 17a for injecting the fuel, is formed in this oblique surface. Further, the fuel adding nozzle 17 is fitted into the fitting bore 101 in a state where an annular gasket 17d having an outside diameter substantially equal to the outside diameter of the drum member 17b and an inside diameter slightly larger than an outside diameter of the front end member 17c, is annularly fitted to an outer periphery of the front end member 17c. The gasket 17d is composed of a material exhibiting a relatively higher coefficient of thermal conductivity such as cooper or a copper alloy than those of the cylinder head 100a (composed of, e.g., cast iron) and the fuel adding nozzle 17 (composed of, e.g., stainless steel). An internal surface configuration of the fitting bore 101 is substantially an outer shape extending from the front end member 17c of the fuel adding nozzle 17 to the vicinity of a middle of the drum member 17b. More specifically, the internal surface of the fitting bore 101 is configured in such a way that a cylindrical hole 101a having a relatively large diameter and a bottomed cylindrical hole 101b having a small diameter are formed coaxially in continuity.

The bottomed cylindrical hole 101b formed on a deep side of the fitting holt 101 is formed with an injection passageway 101c communicating with the exhaust port in a way of extending downstream of the exhaust passageway. The injection hole 17a of the fuel adding nozzle 17, in the state where the fuel adding nozzle 17 is fitted into the fitting bore 101, faces to the exhaust port 40a via the injection passageway 101c.

That is, the fuel adding nozzle 17 is in a state of being embedded in the cylinder head 100a with a wall 102 (structural member) having some thickness being interposed between the bottom surface of the front end member 17c and the internal surface of the exhaust port 40a. Besides, the fuel adding nozzle 17 takes such a construction that the injection hole 17a of the front end member 17c communicates with the exhaust port 40a via the injection passageway 101c formed in the cylinder head 100a.

On the other hand, a part (which will hereinafter be termed a water jacket) 110 of the passageway for the cooling water circulating through within the cylinder head 100a, is formed in a position proximal to an outer edge of the gasket 17d. During an operation of the engine 100, the cooling water within the water jacket 110 adequately circulates along a radiator (not shown) having a heat radiating function, thereby keeping the cooling water substantially at a fixed temperature (cooling water temperature).

Next, a principal internal structure of the fuel adding nozzle 17 and an operation mode thereof will be explained in relation to the peripheral portion.

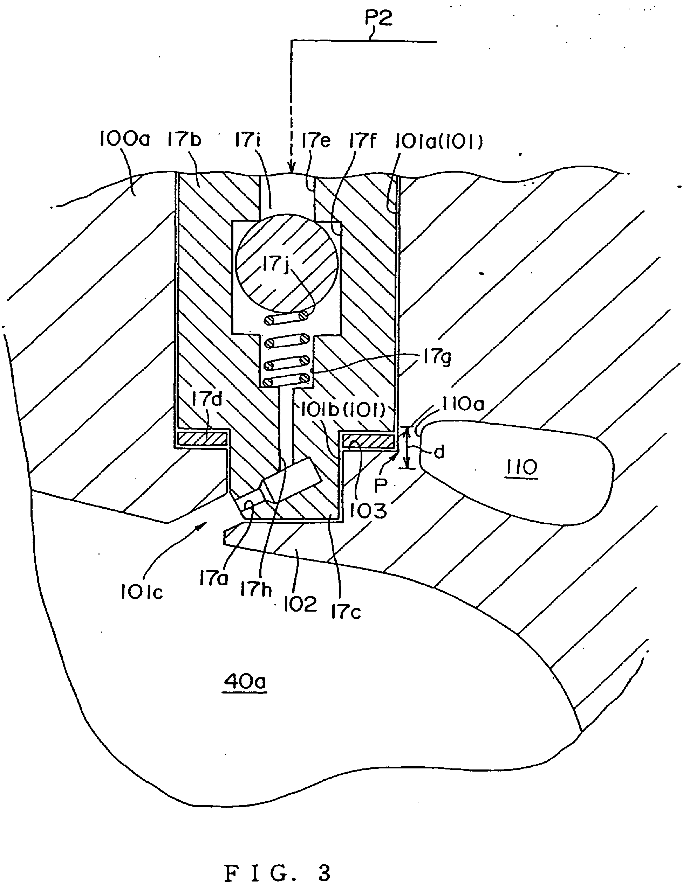

FIG. 3 is a sectional view showing some of the components in enlargement in FIG. 2 and also details of the internal structure especially of the fuel adding nozzle 17.

As illustrated in FIG. 3, in the engine 100 according to the embodiment 1, the exhaust port 40a, the water jacket 110 and the fuel adding nozzle 17 are disposed in the following relationship.

Namely, the water jacket 110 is disposed in close proximity to at least a part of an outer edge of an internal surface (that will hereinafter be called a nozzle seat) 103 of the cylinder head 100a which faces to the bottom surface of the gasket 17d, whereby the heat contained in the gasket 17d on the nozzle seat 103 is efficiently transferred to the cooling water within the water jacket 110.

Further, supposing that a most proximal position, to the water jacket 110, of the outer edge of the nozzle seat 103 is set as a point P, a geometry between the nozzle seat 103 and the water jacket 110 is set so that the point P is contained within a projection plane (range) d of an opposite surface 110a directed to the axial core of the fuel adding nozzle 17 . Note that the projection plane (range) d preferably embraces substantially the outer peripheral surface of the gasket 17d facing to the water jacket 110. The opposite surface 110a, to the fuel adding nozzle 17, of the water jacket filled with the cooling water may be defined as an effective heat receiving surface for efficiently absorbing the heat when the heat transfers to the water jacket 110 from the fuel adding nozzle 17 and the gasket 17d as well. Therefore, the geometrical relationship described above is applied to between the nozzle seat 103 and the water jacket 110, thereby optimizing a heat transfer efficiency of the heat transferred to the cooling water in the water jacket 110 from the gasket 103.

Further, a distance between the nozzle seat 103 and the internal surface of the exhaust port 40a is set small enough to make a speed (efficiency) at which the heat contained in the exhaust gas in the exhaust port 40a is absorbed by the cooling water in the water jacket 110 through the gasket 103 higher than a speed (efficiency) at which the heat is absorbed by the front end member 17c through the wall 102 and the injection passageway 101c.

On the other hand, an internal passageway for leading the fuel pressure-fed via the added fuel passageway P2 to the injection hole 17a, is formed in the interior of the fuel adding nozzle 17. This internal passageway is constructed of plural segments of pipe-like passageways such as a first segment of pipe-like passageway 17e communicating directly with the added fuel passageway P2, a second segment of pipe-like passageway 17f having a diameter larger than a diameter of the first pipe-like passageway 17e, a third segment of pipe-like passageway 17g having a diameter smaller than that of the second segment of pipe-like passageway 17f, and a fourth segment of pipe-like passageway 17h having a diameter much smaller than that of the third segment of pipe-like passageway 17g, which are disposed sequentially in continuity. The second segment of pipe-like passageway 17f accommodates a metal ball (check ball) 17I having a diameter larger than the first segment of pipe-like passageway 17e. Further, a spring 17j accommodated in the fourth segment of pipe-like passageway 17g biases the check ball 17I against the pressure-feeding direction of the fuel, whereby the check ball 17I closes a boundary space between the first and second pipe-like passageways 17e and 17f.

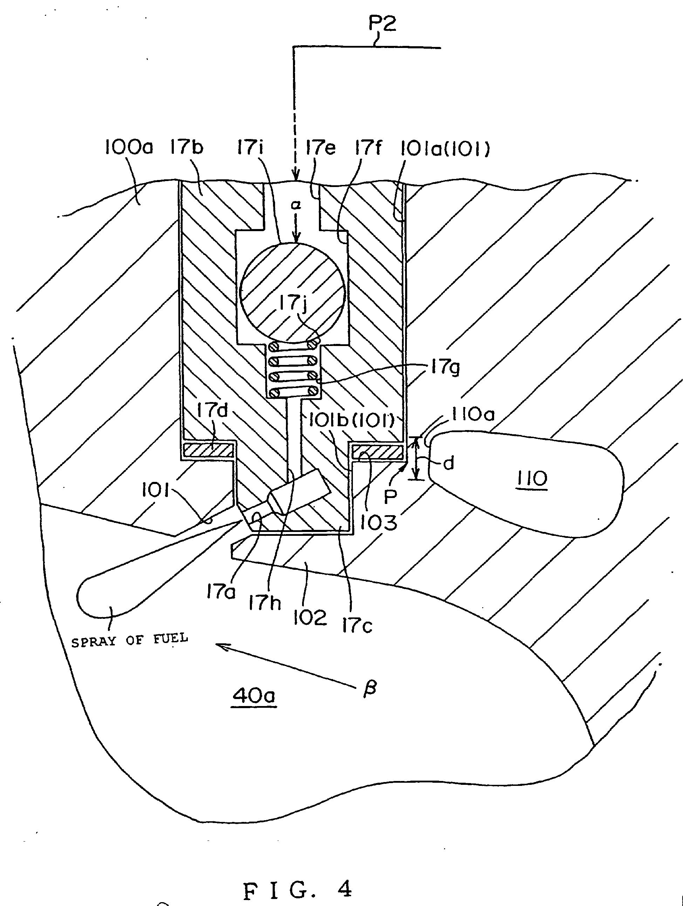

When the fuel pressure in the first segment of pipe-like passageway 17e becomes higher than a predetermined pressure, as shown in FIG. 4, the fuel in the same passageway 17e pushes the check ball 17I to move in an arrow direction α. The fuel is thus allowed to flow toward the second segment of pipe-like passageway 17f from the first segment of pipe-like passageway 17e, thereby spraying the fuel out of the injection hole 17a. The sprays of fuel reach within the exhaust port 40a via the injection passageway 101c. The sprays of fuel having reached within the exhaust port 40a are soon vaporized in the high-temperature exhaust gas flowing in an arrow direction β within the exhaust port 40a, and transferred in diffusion to the catalyst 41 disposed downstream in the exhaust system 40.

Herein, the liquid fuel is immediately vaporized under the high-temperature condition, and it is therefore preferable that the fuel jetted once out of the fuel adding nozzle 17 be exposed to the high-temperature exhaust gas within the exhaust system 40 (exhaust port 40a). By contrast, if the fuel adding nozzle 17 itself comes to a high temperature, the fuel flowing through inside the nozzle 17 is carbonized enough to be stacked on the internal surface of the passageway or enough to facilitate deterioration of the spring 17j. In particular, as shown in the discussion on the prior art, in the case of taking such a system structure that the injection port for the reducer is exposed directly to the exhaust passageway when injection-supplying the-fuel (reducer) into the exhaust system through the fuel adding nozzle, for instance, such a system geometry that the front end member of the fuel adding nozzle is protruded into the exhaust system, the temperature of the fuel adding nozzle 17 remarkably rises.

As for this point, in the engine 100 according to the embodiment 1, the heat contained in the exhaust gas flowing through inside the exhaust port 40a is blocked by the wall 102, and is not therefore transferred directly to the bottom surface of the front end member 17c of the fuel adding nozzle 17 in almost all cases. Further, the injection hole 17a and the oblique surface of the front end member 17c formed with the same injection hole 17a communicate with the internal space of the exhaust port 40a, and nevertheless the heat receiving quantity from the high-temperature exhaust gas flow (hot air) is decreased by through the injection passageway 101c. Moreover, the heat conducting to the injection passageway 101c and the wall 102 from the exhaust gas within the exhaust port 40a and the heat, though not large, absorbed by the front end member 17c of the fuel adding nozzle 17, are transferred to the gasket 17d via the gap between the front end member 17c and the cylinder head 100a and further absorbed by the cooling water in the water jacket 110.

The heat receiving quantity decreasing action produced by the passageway 101c and the wall 102 that form the structural member covering the exposed portion of the fuel adding nozzle 17 with respect to the exhaust port 40a and the heat radiating action to the cooling water through the gasket 17d exhibiting the high coefficient of heat conductivity, function in multiplication, thereby preferably restraining the rise in the temperature of the fuel adding nozzle 17 (especially the front end member 17c thereof).

As discussed above, according to the embodiment 1, a part of the fuel adding nozzle 17 is embedded under the internal surface of the exhaust port 40a without protruding from the same internal surface, whereby the fuel adding nozzle 17 does not directly receive the high-temperature exhaust gas flowing within the exhaust port. Further, the existence f the wall 102 leads to a further decrease in the heat receiving quantity of the fuel adding nozzle 17.

Hence, it never happens that the fuel staying at the injection hole and in the internal passageway of the fuel adding nozzle 17, especially in the internal passageway within the front end member 17c, is carbonized enough to cause clogging in those portions or to deteriorate the spring 17j serving as the component of the valve structure in the fuel adding nozzle 17 and to lower a valve opening pressure. Further, there is no possibility in which the protruded portion of the fuel adding nozzle from the internal surface of the exhaust port 40a might cause a disturbance of the flow of the exhaust gas in the exhaust port 40a.

Besides, the injection passageway 101c communicating with between the injection hole 17a and the exhaust port 40a preferably ensures the fuel flowing path and mode of the fuel that is sprayed and thus injection-supplied into the exhaust port 40a via the injection hole 17a.

Moreover, with the structure that the nozzle seat 103 (gasket 17d) and the internal surface of the exhaust port 40a are sufficiently close to each other, and the nozzle seat 103 (gasket 17d) and the water jacket 110 are likewise sufficiently close to each other, the heat contained in the exhaust gas flowing within the exhaust port 40a, without being absorbed by the fuel adding nozzle 17 (especially the front end member 17c thereof) or even if absorbed, is efficiently released into the cooling water in the water jacket 110 through the gasket 17d exhibiting the high coefficient of thermal conductivity. Then, the rise in the temperature of the fuel adding nozzle 17 (particularly the front end member 17c thereof) is preferably restrained.

Accordingly, the function of the fuel adding nozzle 17 to injection-supply a desired quantity of fuel to the exhaust port 40a at a desired timing, is preferably ensured, and besides its durability is enhanced.

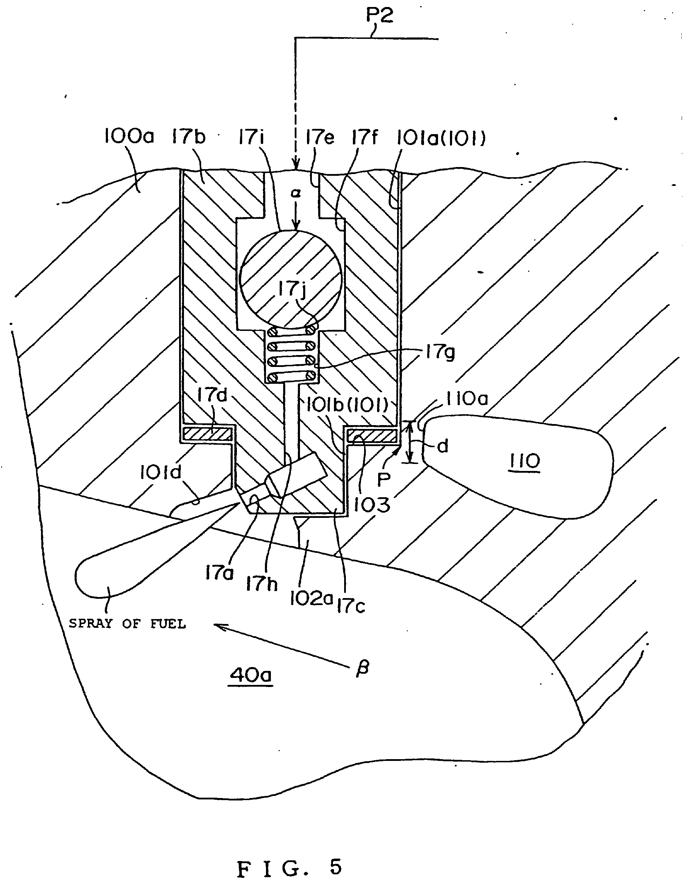

Note that the configurations of the injection passageway 101c and the wall 102 may be modified as in the case of, e.g., an injection passageway 101c and a wall 102a shown in FIG. 5. That is, the wall surface of the wall 102a is set smaller than the wall surface of the wall 102, whereby a passageway space of the injection passageway 101c is formed larger than the passageway space of the injection passageway 101.

With these configurations, the portion, exposed to the exhaust port 40a, of the front end member 17c of the fuel adding nozzle 17 is enlarged, and the contact surface (the heat receiving surface of the front end member 17c) of the front end member 17c with the exhaust gas slightly increases, however, the heat radiating efficiency from the front end member 17c increases, and the function of restraining the rise in temperature of the fuel adding nozzle 17 (especially the front end member 17c thereof) is sufficiently ensured. Namely, the same or substantially the same effect as by the structure shown in FIG. 3 or 4 can be exhibited. Further, on the occasion of working the cylinder head 100a in order to form the fitting bore 101, the working thereof is rather enhanced.

### (Embodiment 2)

Next, a discussion on the exhaust emission control system of the internal combustion engine in a second embodiment of the present invention, will be focused on different points from the first embodiment discussed above.

Note that the basic construction of the engine 1 to which the present invention is applied, and the basic hardware architecture of the ECU 80 in the second embodiment, are substantially the same as those explained in the first embodiment discussed above. Hence, the components having the same configurations and functions as those applied in the first embodiment are marked with the same numerals, and their repetitive explanations are herein omitted.

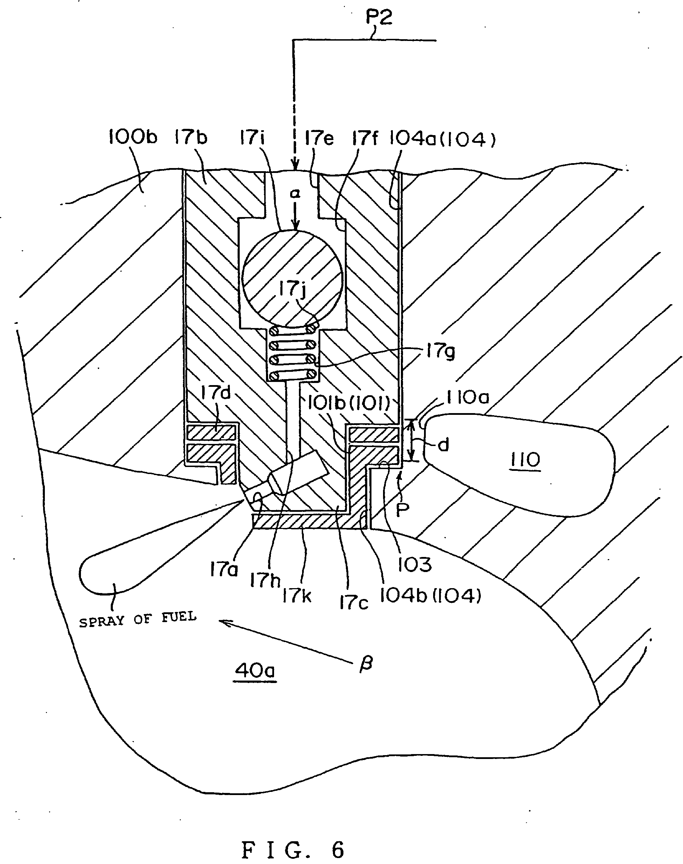

FIG. 6 is a sectional view showing the principal internal structure of the fuel adding nozzle attached to the cylinder head of the engine in the second embodiment together with the peripheral portion thereof. Similarly in FIG. 4, FIG. 6 shows a state where the fuel adding nozzle jets out the fuel toward the exhaust port, thus supplying the fuel.

As shown in FIG. 6, in the engine according to the second embodiment, what is formed as a substitute for the fitting bore 101 formed in the cylinder head 100a in the first embodiment discussed above, is a through-hole (fitting hole) 104 including a cylindrical hole 14a having a relatively large diameter and a cylindrical hole 104b having a relatively small diameter, which are substantially coaxially formed in continuity toward the exhaust port 40a from the top surface of the cylinder head 100b.

The same nozzle seat 103 as in the first embodiment is provided at a boundary between the cylindrical holes 104a and 104b. There is further provided a cap 17k having an outer shape substantially coincident with the internal configuration, extending from the side end f the exhaust port 40a to an opening end of the cylindrical hole 104b, of the cylindrical hole 104a of the fitting hole 104, and substantially closing the opening end, on the side of the exhaust port 40a, of the fitting hole 104. The cap 17k is fitted to the front end member 17c of the fuel adding nozzle mounted with the gasket 17d. the cap 17k covers the portion, protruded from the gasket 17d, of the front end member 17c in such a form that only the oblique surface formed with the injection hole 17a is exposed. The cap 17k is, as the gasket 17d is, composed of the material exhibiting the relatively high coefficient of thermal conductivity than those of the cylinder head 100a and the fuel adding nozzle 17, such as cooper or the cooper alloy etc.

Incidentally, also in the embodiment 2, supposing that a most proximal position, to the water jacket 110, of the outer edge of the nozzle seat 103 is set as the point P, a geometry between the nozzle seat 103 and the water jacket 110 is set so that the point P is contained within the projection plane (range) d of the opposite surface 110a directed to the axial core of the fuel adding nozzle 17. Herein, it is preferable that the projection plane (range) d embraces substantially a portion, facing to the water jacket 110 as well as facing to at least the internal peripheral surface of the cylindrical hole 104a, of the outer peripheral surfaces of the gasket 17d and of the cap 17k.

As discussed above, the second embodiment takes, as a substitute for the wall 102 in the first embodiment discussed above, the configuration that the cap 17k covers the front end member 17c of the fuel adding nozzle 17, whereby, as in the first embodiment, the part of the fuel adding nozzle 17 is embedded under the internal surface of the exhaust port 40a without protruding from the same internal surface, and the fuel adding nozzle 17 does not therefore directly receive the high-temperature exhaust gas flowing within the exhaust port.

Further, as for the heat transferring to the fuel adding nozzle 17 from the exhaust port 40a, the heat radiating action tot he cooling water is further enhanced by the existence of the cap 17k functioning efficiently as an escape to other member (water jacket), and it follows that the heat receiving quantity of the fuel adding nozzle 17 is preferably decreased.

Hence, it never happens that the fuel staying at the injection hole and in the internal passageway of the fuel adding nozzle 17, especially in the internal passageway within the front end member 17c, is carbonized enough to cause clogging in those portions or to deteriorate the spring 17j serving as the component of the valve structure in the fuel adding nozzle 17 and to lower a valve opening pressure. Further, there is no possibility in which the protruded portion of the fuel adding nozzle from the internal surface of the exhaust port 40a might cause a disturbance of the flow of the exhaust gas in the exhaust port 40a.

Moreover, with the structure that the nozzle seat 103 (gasket 17d) and the internal surface of the exhaust port 40a are sufficiently close to each other, and the nozzle seat 103 (gasket 17d) and the water jacket 110 are likewise sufficiently close to each other, the heat contained in the exhaust gas flowing within the exhaust port 40a, without being absorbed by the fuel adding nozzle 17 (especially the front end member 17c thereof) or even if absorbed, is efficiently released into the cooling water in the water jacket 110 through the cap 17k and the gasket 17d each exhibiting the high coefficient of thermal conductivity. Then, the rise in the temperature of the fuel adding nozzle 17 (particularly the front end member 17c thereof) is preferably restrained.

Accordingly, the function of the fuel adding nozzle 17 to injection-supply a desired quantity of fuel to the exhaust port 40a at a desired timing, is preferably ensured, and besides its durability is enhanced.

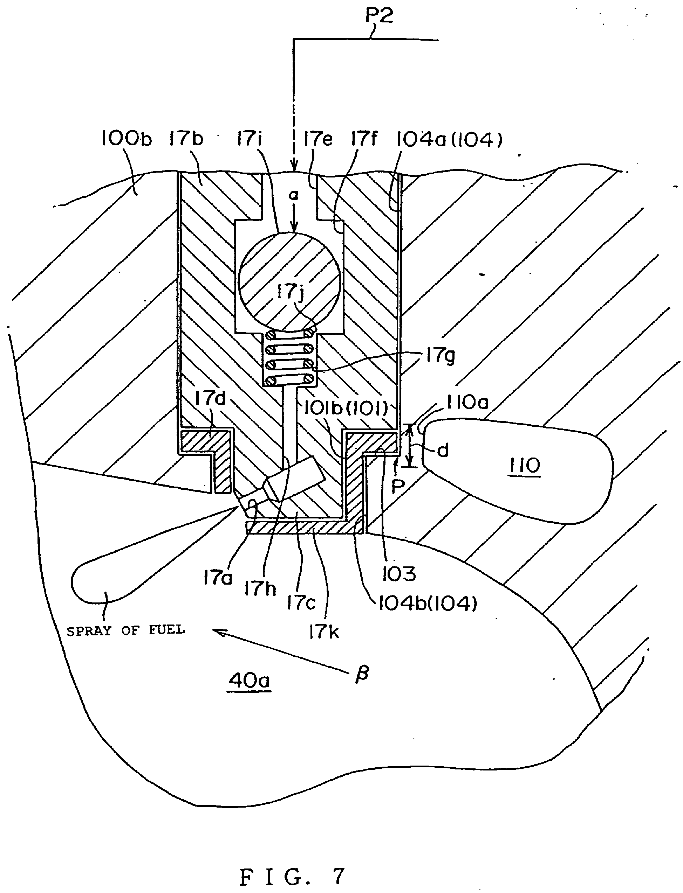

Note that the gasket 17d is, as shown in FIG. 7, removed, the thermal conduction to the fuel adding nozzle 17 (especially the front end member 17c) from the exhaust gas in the exhaust port 40a is restrained by using only the cap 17k on one hand, and the cooling water in the water jacket 110 may be given the function of radiating the heat peripheral to the front end member 17c.

### (Embodiment 3)

Next, a discussion on the exhaust emission control system of the internal combustion engine in a third embodiment of the present invention, will be focused on different points from the first embodiment discussed above.

Note that the basic construction of the engine 1 to which the present invention is applied, and the basic hardware architecture of the ECU 80 also in the third embodiment, are substantially the same as those explained in the first embodiment discussed above. Hence, the components having the same configurations and functions as those applied in the first embodiment are marked with the same numerals, and their repetitive explanations are herein omitted.

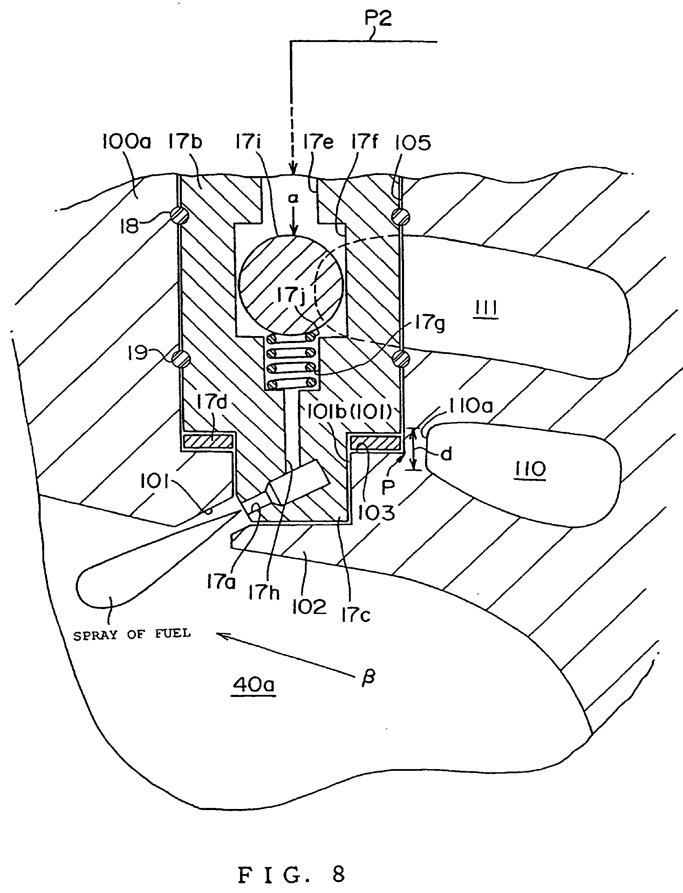

FIG. 8 is a sectional view showing the principal internal structure of the fuel adding nozzle attached to the cylinder head of the engine in the third embodiment together with the peripheral portion thereof. Similarly in FIG. 4, FIG. 8 shows a state where the fuel adding nozzle jets out the fuel toward the exhaust port, thus supplying the fuel.

As shown in FIG. 8, in the third embodiment, a water jacket 111 formed in the cylinder head 101c of the engine communicates with the fitting bore 105 of the fuel adding nozzle 17, and an outer peripheral surface of the drum member 17b of the fuel adding nozzle 17 fitted into the fitting bore 105, serves as a part of the internal wall of the water jacket 111.

A couple of O-rings 18, 19 are annularly fitted, with a portion forming the internal wall of the water jacket 111 being interposed therebetween, in gaps between the outer peripheral surface of the drum member 17b of the fuel adding nozzle 17 and the internal peripheral surface of the fitting bore 105, thereby sealing these gaps to prevent the cooling water from leaking on the side of the top surface of the cylinder head 101c or the exhaust port 40a.

Based on the configuration described above, the whole or a local area within the fuel adding nozzle 17 can be forcibly efficiently cooled from the outer peripheral surface of the drum member 17b of the fuel adding nozzle 17.

Note that the structure of the passageway of the water jacket and its positional relationship with the fuel adding nozzle 17 are not limited to the geometry of being provided in the vicinity of the one-side peripheral surface of the fuel adding nozzle 17 as in the case of the water jacket 110 illustrated in the first through third embodiments. The water jacket may be provided extending in the vicinities of the peripheral surfaces on both sides, or provided surrounding the whole peripheral surface. Further, as in the case of the water jacket 111 shown in the third embodiment, the present invention is not confined to the configuration in which the water jacket is provided so that a part of the one-side peripheral surface is formed as the internal wall, and may involve applying a structure that the fuel adding nozzle penetrates the water jacket or a positional relationship between the water jacket and the fuel adding nozzle.

Further, the materials of the gasket 17d applied in the first to third embodiments and of the cap 17k applied in the second embodiment, are not limited to cooper and the cooper alloy and may involve the use of other materials if capable of exhibiting a higher (coefficient of) thermal conductivity to some extent than the materials of the cylinder head and the fuel adding nozzle, and a predetermined strength and durability.

### (Embodiment 4)

The exhaust emission control system of the internal combustion engine according to the present invention will hereinafter be described by way of a fourth embodiment in which the present invention is applied to the diesel engine system.

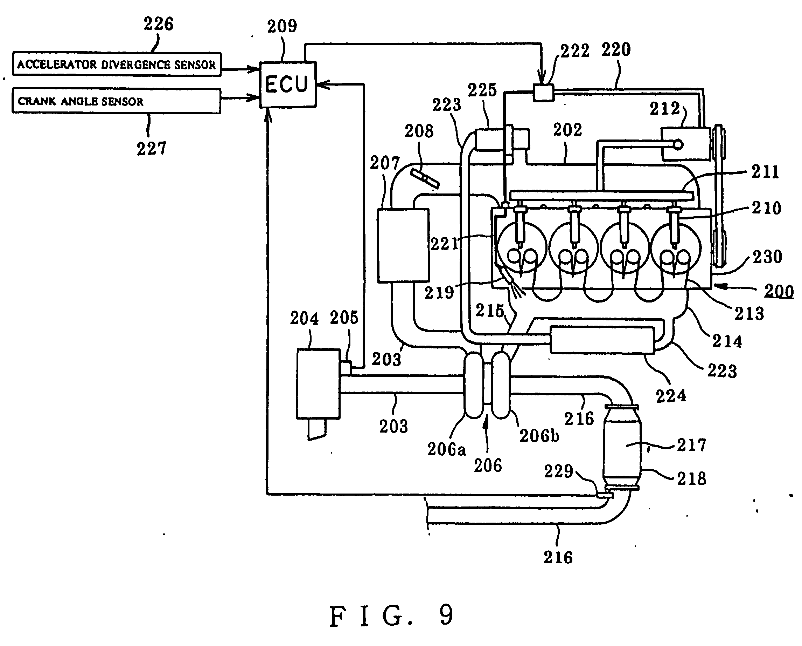

Referring to FIG. 9, an internal combustion engine (which will hereinafter be simply called an engine) 200 may be classified as the straight four-cylinder diesel engine system. The suction air is introduced via an intake manifold 202 and an intake pipe (intake passageway) 203 into the combustion chamber formed in each of the cylinders of the engine 200. An air cleaner 204 is provided at a start end of the intake pipe 203. An airflow meter 205, a turbocharger 206, an intake-side turbine 206a, an inter cooler 207 and a throttle valve 208 are provided along the intake pipe 203.

The airflow meter 205 outputs an electronic control unit (ECU) 209 an output signal corresponding to a quantity of fresh air flowing into the intake pipe 203 via the air cleaner 204. The ECU 209 calculates a suction air quantity based on the output signal from the airflow meter 205.

Further, each of the fuel injection valves 210 jets out the fuel (light oil) into the combustion chamber of each cylinder of the engine 200. This fuel is pumped up by a fuel pump 212 from an unillustrated fuel tank and supplied to the fuel injection valve 210 via a pressure accumulation chamber 211. Note that the fuel pump 212 is driven by an unillustrated crank shaft of the engine 200. The valve open timing and a valve open period of each fuel injection valve 210 are controlled by the ECU 209 in accordance with the operating state of the engine 200.

Further, the exhaust gas produced in the combustion chamber of each cylinder of the engine 200 is discharged from an exhaust port 213 of each cylinder into an exhaust manifold 214. Herein, for convenience in term of the explanation, as to cylinder numbers of the engine 200, the cylinder disposed at the right end in FIG. 9 is given No. 1, and those given No. 2, No.3 in sequence toward the left, and the last cylinder disposed at the left end in FIG. 9 is given No.4. An exhaust gas converging pipe 215 for guiding the exhaust gas to the exhaust-side turbine 206b of the turbocharger 206 is connected to a portion, facing to the No.4 cylinder, of the exhaust manifold 214 . The exhaust-side turbine 206b is actuated by the exhaust gas, and the intake-side turbine 206a linked to the exhaust-side turbine 206b is thereby actuated, thus boosting the pressure of the suction air.

The exhaust gas is discharged into the exhaust pipe (exhaust passageway) 216 from the exhaust-side turbine 206b, and released into the atmosphere via an unillustrated silencer. A casing 218 encasing an storage reduction type NOx catalyst (NOx catalyst) 217, is provided midways of the exhaust pipe 216. The storage reduction type NOx catalyst 217 will be explained in depth later on.

A fuel-adding nozzle (an add port of an reducer adding device) is fitted, facing to the exhaust port 213 of the NO.4 cylinder, to the cylinder head 230 of the engine 200. The fuel adding nozzle 219 can be supplied with the fuel pumped up by the fuel pump 212 through an added fuel passageway (including a fuel pipe 220 and a fuel passageway 221 provided in the cylinder head 230). An add quantity of the fuel is controlled by a control valve 222 provided midways of the fuel pipe 220. Note that switching (opening/closing) and an aperture of the control valve 222 are controlled by the ECU 209. The fuel adding nozzle 219 is fitted in a way of being jetting out toward the exhaust gas converging pipe 215. Note that the fuel pump 212, the fuel adding nozzle 219, the fuel pipe 220, the fuel passageway 221 and the control valve 222, constitute the reducer adding device in the fourth embodiment.

One end of an exhaust gas recirculation pipe (which will hereinafter abbreviated to an EGR pipe) 223 is connected to a portion, facing to the No. 1 cylinder, of the exhaust manifold 214. The other end of this EGR pipe is connected to the intake manifold 202.. the EGR pipe forms the exhaust gas recirculation passageway for recirculating some of the exhaust gas back to the intake system. An EGR cooler 224 and an EGR valve 225 are provided halfway of the EGR pipe 223. An aperture of the EGR valve 225 is controlled by the ECU 209 in accordance with the operating state of the engine 200, thereby controlling an exhaust gas recirculation quantity. The EGR pipe 223, the EGR cooler 224 and the EGR valve 225 constitute the exhaust gas recirculation (EGR) device.

Further, an exhaust gas temperature sensor 229 for outputting an output signal corresponding to a temperature of the exhaust gas flowing out of the casing 218, is provided in the exhaust pipe 216 just downstream of the casing 21.

The digital computer based ECU 209 includes a ROM (Read-Only Memory), a RAM (Random Access Memory), a COU (Central Processing Unit), an input port and an output port, which are connected to each other via a bidirectional bus. The ECU 209 executes the basic control of the engine 200 such as controlling the fuel injection quantity, etc.

For attaining the basic control, an input signal from an accelerator divergence sensor 226 and an input signal from a crank angle sensor 227, are inputted to the input port of the ECU 209. The accelerator divergence sensor 226 outputs to the ECU 209 an output voltage proportional to an aperture of the throttle valve 208. The ECU 209 calculates an engine load based on the output signal of the accelerator divergence sensor 226. The crank angle sensor 227 outputs to the ECU 209 an output pulse each time the crank shaft rotates through a predetermined angle. The ECU 209 calculates an engine speed based on this output pulse. The ECU 209 judges an engine operating state from the engine load and the engine speed. The ECU 209 thereby controls the valve open timing and valve open period of the fuel injection valve 210 corresponding to the engine operating state.

The storage reduction type NOx catalyst (which will hereinafter be called the NOx catalyst in some cases) 217 encased by the casing 218, is structured such that for example, alumina (Al₂O₃) is used as the carrier, and at least one selected substance among alkali metals such as potassium (K), sodium (Na), lithium (Li) and cesium (Cs), alkali earth such as barium (Ba) and calcium, rare earth such as lanthanum (La), yttrium (Y), and a precious metal like platinum (Pt), are supported on this carrier.

The NOx catalyst 217 performs NOx absorption/release action of absorbing NOx when an air/fuel ratio of the inflow exhaust gas (which will hereinafter termed an exhaust gas air/fuel ratio) is leaner than a stoichiometric air/fuel ratio, and releasing absorbed NOx as NO₂ or NO when the exhaust air/fuel ratio becomes equal to or richer than the stoichiometric air/fuel ratio with the result that the oxygen concentration in the inflow exhaust gas decreases. Then, NOx (NO₂ or NO) released from the NOx catalyst 217 immediately reacts with unburned HC and CO existing in the exhaust gas and thus reduced into N₂.

Accordingly, if the exhaust gas air/fuel ratio is properly controlled, it follows that HC, CO, NOx can be purged from the exhaust gas.

Note that the exhaust gas air/fuel ratio herein implies a ratio of a total quantity of the air supplied to the exhaust passageway disposed upstream of the NOx catalyst 217, the engine combustion chamber and the intake passageway to a total quantity of the fuel (hydrocarbon). Accordingly, if neither the fuel nor the reducer nor the air is supplied into the exhaust passageway disposed more upstream than the NOx catalyst 217, the exhaust gas air/fuel ratio is coincident with an air/fuel ratio of the mixture gas supplied into the engine combustion chamber.

In the case of the diesel engine, the combustion takes place in a by far leaner region than a stoichiometric ratio (stoichiometric air/fuel ratio (A/F) = 14 ~ 15), and hence the air/fuel ratio of the exhaust gas flowing into the NOx catalyst 217 is very lean in a normal operating state of the engine . Then, NOx in the exhaust gas is absorbed by the NOx catalyst 217, and a quantity of the NOx released from the NOx catalyst 217 is extremely small.

Further, in the case of a gasoline engine, the mixture supplied into the combustion chamber is set to the stoichiometric ratio or a rich air/fuel ratio, whereby the air/fuel ratio of the exhaust gas becomes the stoichiometric air/fuel ratio or the rich air/fuel ratio. Then, the oxygen concentration in the exhaust gas is decreased, and NOx absorbed by the NOx catalyst 217 can be released therefrom. In the case of the diesel engine, however, if the mixture supplied into the combustion chamber is set to the stoichiometric ratio or a rich air/fuel ratio, there arises a problem in which soot is produced when burned, and therefore this mode can not be adopted.

Accordingly, in the case of the diesel engine, it is required that the reducer be supplied into the exhaust gas at a predetermined timing before the NOx absorbing capacity of the NOx catalyst 217 becomes saturated, the oxygen concentration in the exhaust gas be decreased, and NOx absorbed by the NOx catalyst 217 be released and reduced. It is to be noted that generally the light oil serving as the fuel of the diesel engine is often used as the reducer described above.

Therefore, in the fourth embodiment, ECU 209 estimates a quantity of NOx absorbed by the NOx catalyst 217 from a hysteresis of the operating states of the engine 200. When the thus estimated NOx quantity reaches a predetermined value, the control valve 222 is kept open for only a predetermined time, thereby injecting a predetermined quantity of fuel into the exhaust gas from the fuel adding nozzle 219. The oxygen concentration in the exhaust gas flowing into the NOx catalyst 217 is thereby decreased, and NOx absorbed by the NOx catalyst is released and thus reduced into N₂.

Herein, the fuel adding nozzle 219 jets out the fuel towards the exhaust gas converging pipe 215, and hence the added fuel smoothly flows to the exhaust gas converging pipe 215. Then, the fuel adding nozzle 219 is fitted to the exhaust port 213 of the No. 4 cylinder. On the other hand, a position in which the EGR pipe 223 is connected to the exhaust manifold 214 is in close proximity to the NO.1 cylinder, and therefore the fuel added from the fuel adding nozzle 219 does not spread into the EGR pipe 223.

Moreover, the EGR pipe 223 is connected at one point to the exhaust manifold 214, so that the durability is enhanced, and the cost can be also decreased. Further, the connecting point with the EGR pipe 223 is provided at a portion of the exhaust manifold 214, at which the inflow exhaust gases from the respective cylinders converge, and hence the exhaust gas flowing through the EGR pipe 223 becomes hard to be influenced by exhaust-pulse. Then, the EGR quantity can be precisely controlled.

### (Embodiment 5)

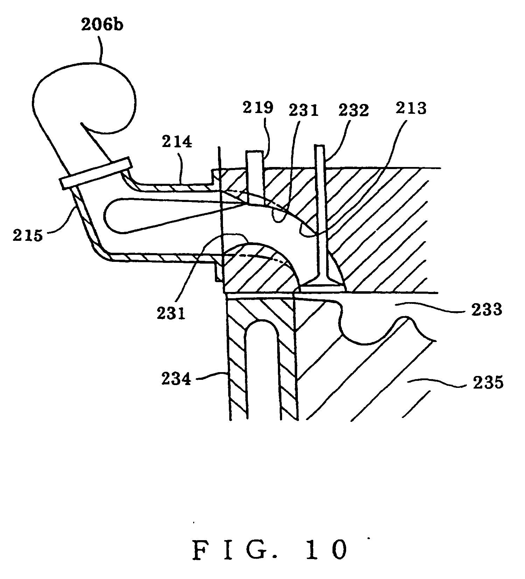

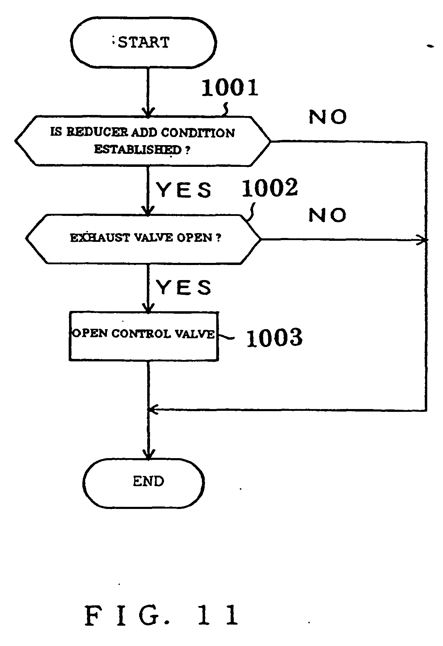

The exhaust emission control system of the internal combustion engine in a fifth embodiment will be described with reference to FIGS. 10 and 11.

FIG. 10 is a sectional view showing an exhaust port 213 of the NO.4 cylinder fitted with the fuel adding nozzle 219, and a peripheral portion thereof. In the exhaust port 213 of the NO.4 cylinder, a swelling 231 is formed swollen at the portion to which the fuel adding nozzle 219 is fitted. The exhaust port 213 narrows down in section due to this swelling 231 with this configuration, when the exhaust gas is discharged from the combustion chamber 233 by opening the exhaust valve 232, a flow of the exhaust gas passing through the swelling 231 is accelerated.

Then, in accordance with the fifth embodiment, the timing of adding the fuel from the fuel adding nozzle 219 is synchronized with the valve open timing of the exhaust valve 232 of the No.4 cylinder. The fuel is thereby added from the fuel adding nozzle 219 into the exhaust gas flowing at a high speed through the swelling 231 of the exhaust port 213, thus furthering the fine particles of fuel. Moreover, the fuel added from the fuel adding nozzle 219 is fed smoothly along the flow of the exhaust gas towards the exhaust gas converging pipe 215 via the exhaust manifold 214. With the multiplier effect thereof, the fuel added from the fuel adding nozzle 219 becomes hard to be adhered to the exhaust manifold 214.

When the engine 200 is in the operating state of being low of its rotations and of the load, the exhaust gas flow rate is small, and the temperature of the exhaust gas is also low. Hence, if the swelling 231 is not provided in the exhaust port 213, the fuel added from the fuel adding nozzle 219 is easy to be adhered to the exhaust manifold 214, with the result that the supply of the reducer to the NOx catalyst 217 is retarded. Further, the fuel adhered to the exhaust manifold 214 is easy to flow round into the intake system via the EGR pipe (EGR passageway), and the smokes might fall into deterioration.

In the fifth embodiment, however, as described above, the exhaust port 213 is provided with the swelling 231, the fuel addition from the fuel adding nozzle 219 synchronizes with the valve open timing of the exhaust valve 232. Hence, even when the engine is in such an operating state that the both of the rotation and the load are low, the fuel is hard to be adhered to the exhaust manifold 214, and the added fuel can be prevented from flowing round into the intake system. Further, the production of the smokes can be restrained. Moreover, the added fuel can be decreased, thereby enhancing a fuel efficiency.

Note that the numeral 234 represents a cylinder block, and 235 indicates a piston in FIG. 10. Other configurations are the same as those in the fourth embodiment, and therefore the repetitive explanations are omitted.

The ECU 209 controls, based on an estimation of the crank angle from the valve open timing of the exhaust valve 232, the fuel add timing of the fuel adding nozzle 219, i.e., the valve open timing of the control valve 222 on the basis of the operating timing of the fuel injection valve 210 of the No. 4 cylinder.

FIG. 11 shows a fuel add control routine in the fifth embodiment. The fuel add control routine is stored beforehand in the ROM of the ECU 209 and repeatedly executed by the CPU.

### <Step 1001>

To begin with, the ECU 209 judges in step 1001 whether or not a reducer add condition is established. Herein, a requirement for establishing the reducer add condition is that a catalyst temperature of the NOx catalyst 217 is an active temperature and it is a time when the NOx absorbed by the NOx catalyst 217 should be released and reduced.

If judged to be negative in step 1001, the ECU 209 temporarily finishes the execution of this routine.

### <Step 1002>

If judged to be affirmative in step 1001, the ECU 209 advances the processing to step 1002, and judges whether the exhaust valve 232 of the No. 4 cylinder comes to the valve open timing. Whether the valve open timing of the exhaust valve 232 is reached, is judged from the crank angle up to the present time from after the fuel injection valve 210 of the No. 4 cylinder has operated.

If judged negative in step 1002, the ECU 209 temporarily finishes the execution of this routine.

### <Step 1003>

If judged affirmative in step 1002, the ECU 209 goes to step 1003, and opens the control valve 222 with a predetermined aperture for a predetermined time. A predetermined quantity of fuel is added into the exhaust gas from the fuel adding nozzle 219.

### (Embodiment 6)

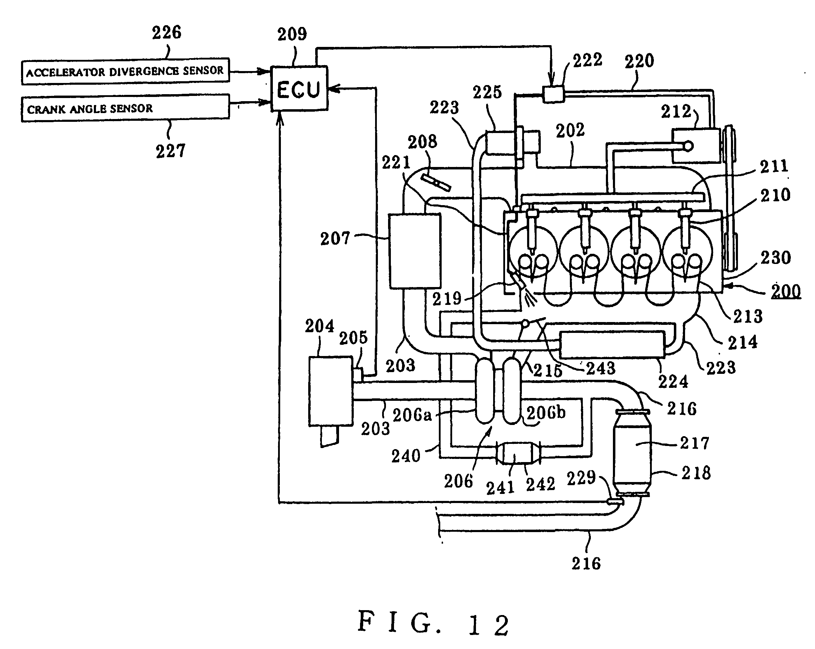

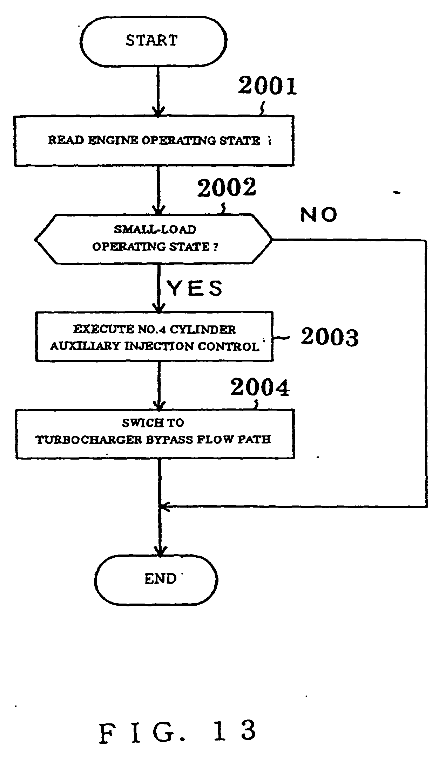

Next, the exhaust emission control system of the internal combustion engine in a sixth embodiment will be explained with reference to FIGS. 12 and 13.

In the exhaust emission control system in the fourth embodiment discussed above, if the engine is in the operating state exhibiting the light load, the exhaust gas flow rate is small, and the temperature of the exhaust gas is low. Hence, the sufficiently fine particles of fuel added from the fuel adding nozzle 219 might not be obtained. Further, even when the fine particles of fuel added from the fuel adding nozzle 219 are obtained, the fine particles of fuel are thereafter cooled by the exhaust-side turbine 206b, and the finer particles of fuel and vaporization thereof in the exhaust-side turbine 206b can not be furthered. As a result, there might be a possibility where NOx absorbed by the NOx catalyst 217 can not sufficiently be released and reduced.

According to the sixth embodiment, the following architecture is further added to the exhaust emission control system in the fourth embodiment in order not to fall into such a situation.

A bypass pipe (bypass passageway) 240 makes a connection between a portion, adjacent to the connecting point with the exhaust gas converging pipe 215, of the exhaust manifold 214, the exhaust side turbine 206b on the exhaust pipe 216 and the casing 218. A casing 242 encasing an oxidation catalyst 241 is provided midways of the bypass pipe 240.

Further, the exhaust manifold 214 is provided with a flow path switch valve 243 for opening/closing the bypass pipe 240 as well as opening/closing the exhaust gas converging pipe 215. The flow path switch valve 243 is controlled by the ECU 209. This flow path switch valve 243 is controlled so that the same valve 243 is normally closes the bypass pipe 240 and opens the exhaust gas converging pipe 215 to guide the exhaust gas to the exhaust-side turbine 206b via the exhaust gas converging pipe 215. As far as a predetermined operating state of the engine is concerned, the switch valve 243 is, as will be explained later on, controlled to close the exhaust gas converging pipe 215 and open the bypass pipe 240, whereby the exhaust gas flows into the bypass pipe 240.

Further, in the exhaust emission control system in the sixth embodiment, with respect to only the cylinder provided with the fuel adding nozzle 219, i.e., the No. 4 cylinder, the switch valve 243 is controlled so that an auxiliary injection of the fuel injection from the fuel injection valve 210 is executed at an expansion stroke or an exhaust stroke of the No.4 cylinder separately from the fuel injection for obtaining the engine output, so far as the case where the engine operates with the small load is concerned. The fuel that has been auxiliary-injected from the fuel injection valve 210 is burned afterward at the expansion stroke or the exhaust stroke, and the temperature of the exhaust gas rises.

Further, according to the exhaust emission control system in the sixth embodiment, matching with the execution of the auxiliary injection in the No.4 cylinder, i.e., as far as the case where the engine operates with the small load is concerned, the flow path switch valve 243 is controlled to close the exhaust gas converging pipe 215 and open the bypass pipe 240. The flow path of the exhaust gas is thereby switched, and the exhaust gas is guided to the bypass pipe 240. The exhaust gas does not pass through the exhaust-side turbine 206 but bypasses this turbine, and is discharged via the oxidation catalyst 241 and the NOx catalyst 217.

In the exhaust emission control system in the sixth embodiment, when the engine operates with the small load, the auxiliary injection of the fuel in the No. 4 cylinder is executed, the temperature of the exhaust gas flowing out of the combustion chamber of the No.4 cylinder is thereby raised. Then, the fine particles of fuel added from the fuel adding nozzle 219 and the vaporization thereof are furthered. For attaining this purpose, in the sixth embodiment also, when the engine operates with the small load, the fuel add timing of the fuel adding nozzle 219 is synchronizes with the valve open period of the exhaust valve of the No. 4 cylinder.

Then, the flow path is switched by controlling the flow path switch valve 243 corresponding to the auxiliary injection of the fuel, whereby the exhaust gas flows into the bypass pipe 24o and thus bypasses the exhaust-side turbine 206b. this makes it feasible to prevent the exhaust gas from being cooled in the exhaust-side turbine 206b and to eliminate factor for deteriorating the vaporization and the fine particles of the added fuel.

Besides, the oxidation catalyst 241 is provided halfway of the bypass pipe 240 in the sixth embodiment, and hence, when the exhaust gas flows through the oxidation catalyst 241, some of the fuel added from the fuel adding nozzle 219 is oxidized, and the reaction heat thereof causes a rise in the temperature of the exhaust gas. Then, the temperature of the NOx catalyst 217 disposed downstream is raised, thereby enhancing a NOx purging rate.

Further, according to the exhaust emission control system in the sixth embodiment, as explained above, the fine particles of fuel added from the fuel adding nozzle 219 and the vaporization thereof are furthered, and therefore HC poisoning (which may also be called SOF poisoning) is restrained.

Moreover, the auxiliary injection is conducted in only the No. 4 cylinder spaced farthest away from the connecting point of the EGR pipe 223 to the exhaust manifold 214, and it is therefore feasible to prevent the auxiliary-injected fuel from flowing round into the intake system via the EGR pipe (EGR passageway) and prevent the smoke being emitted due to this round-inflow of the fuel.

FIG. 13 shows an exhaust gas bypass control routine in the sixth embodiment. This exhaust gas bypass control routine is previously stored in the ROM of the ECU 209 and is repeatedly executed by the CPU.

### <Step 2001>

At first, the ECU 209 reads the present operating state of the engine such as reading an engine speed, an engine load etc.

### <Step 2002>

Next, the ECU 209 goes to step 2002, and judges whether or not the engine 200 is at present in a predetermined small-load operating state. The "predetermined small-load operating state given herein is an operating state where the auxiliary injection of the fuel in the No.4 cylinder is needed, and a judgement criterion is stored beforehand in the ROM of the ECU 209.

If judged to be negative in step 2002, the ECU 209 temporarily finishes the execution of this control routine.

### <Step 2003>

If judged affirmative in step 2002, the ECU 209 advances to step 2003, and the auxiliary injection control for the fuel with respect to the No.4 cylinder is executed.

### <Step 2004>

Next, the ECU 209 goes to step 2004 and operates the flow path switch valve 241 to close the exhaust gas converging pipe 215 and open the bypass pipe 240, thus switching the exhaust flow path. With this switching, the exhaust gas bypasses the exhaust-side turbine 206b and is guided to the NOx catalyst 217 via the bypass pipe 240.

### (Embodiment 7)

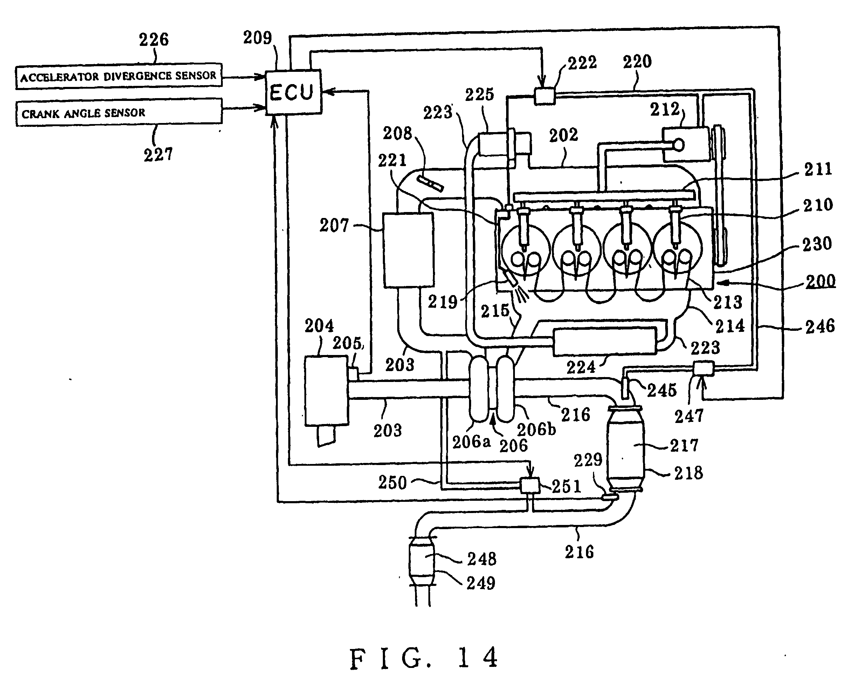

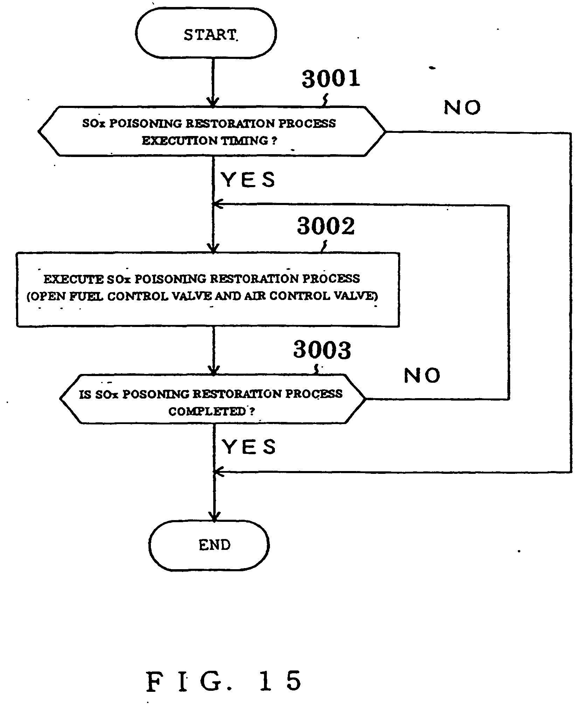

Next, the exhaust emission control system of the internal combustion engine in a seventh embodiment will be explained with reference to FIGS. 14 and 15.

The storage reduction type NOx catalyst 217 suffers from poisoning by sulfur oxide (Sox) generated by burning a sulfur content contained in the fuel (which will hereinafter be called "sulfur poisoning" or "SOx poisoning"), and the NOx purging rate decreases. It is therefore required that the NOx catalyst 217 be subjected to a poisoning restoration process for restoring the catalyst from the SOx poisoning at a proper time. It is known that the restoration from poisoning is effective by keeping the NOx catalyst 217 at a predetermined temperature (e.g., 600 - 650°C) that is by far higher than when releasing and reducing NOx, and setting the air/fuel ratio of the exhaust gas flowing into the NOx catalyst 217 to the stoichiometric air/fuel ratio or the rich air/fuel ratio.

Such being the case, normally when implementing this SOx poisoning restoration process, a temperature raising process of raising a temperature of the NOx catalyst 217 up to a predetermined temperature, is at first executed. What is considered as this temperature raising method may be, for example, a method of increasing the exhaust gas temperature with the auxiliary injection of the fuel into the cylinder from the fuel injection valve 210 at the expansion stroke or the exhaust stroke as explained in the sixth embodiment and thereby raising the temperature of the NOx catalyst 217, and a method of adding the fuel into the exhaust gas from the fuel adding nozzle 219, burning the fuel in the NOx catalyst 217, and thereby raising the temperature of the NOx catalyst 217.

As discussed above, however, it is required that the temperature of the NOx catalyst 217 be remarkably raised when restoring from the SOx poisoning. Therefore, the auxiliary injection or the fuel addition from the fuel adding nozzle 219 comes to a tremendous quantity, and hence the large quantity of fuel flows round into the intake system via the EGR pipe (EGR passageway), resulting in the production of smoke.

Then, according to the exhaust emission control system in the seventh embodiment, the fuel adding nozzle used only for restoration from the SOx poisoning is provided upstream of the NOX catalyst 217, thereby preventing those inconveniences. The exhaust emission control system of the internal combustion engine in the seventh embodiment will hereinafter be described focusing on different points from the fourth embodiment.

In the exhaust emission control system in the seventh embodiment, a fuel adding nozzle 245 used only for the restoration from the SOx poisoning is provided just upstream of the casing 218 that encases the NOx catalyst 217. The fuel adding nozzle 245 is supplied via a fuel pipe 246 with the fuel pumped up by the fuel pump 212. A fuel control valve 247 is provided halfway of the fuel pipe 246. The fuel adding nozzle 245 is fitted so that the fuel is jetted out toward the NOx catalyst 217. The ECU 209 controls opening/closing of the fuel control valve 247. Note that the fuel pump 212, the fuel adding nozzle 245, the fuel pipe 246 and the fuel control valve 247 constitute a second reducer adding device.

Further, a casing 249 accommodating an oxidation catalyst 248 is provided on an exhaust pipe 216 more downstream than the casing 218. Moreover, the exhaust pipe positioned more downstream than the casing 218 but more upstream than the casing 249, and an intake pipe 203 positioned more downstream than the intake-side turbine 206a but more upstream than the inter cooler 207, are connected to each other by an air introducing pipe 250. An air control valve 251 is provided midways of the air introducing pipe 250. The ECU 209 controls opening/closing of the air control valve 251.

According to the exhaust emission control system in the seventh embodiment, when executed the SOx restoration process with respect to the NOx catalyst 217, the fuel adding nozzle 245 jets out the fuel by opening the fuel control valve 247, whereby the air/fuel ratio of the exhaust gas flowing into the NOx catalyst 217 is set equal to or slightly richer than the stoichiometric air/fuel ratio. Then, the fuel added from the fuel adding nozzle 245 is burned in the NOx catalyst 217, thereby raising the temperature of the NOx catalyst 217 up to a temperature enough to release SOx. Further, the NOx catalyst 217 is kept at that temperature, thereby releasing SOx out of the NOx catalyst 217, and purging SOx by reducing it into SO₂. Then, simultaneously with this process, the air control valve 251 is opened to introduce the air boosted by the intake-side turbine 206a into the exhaust gas existing downstream of the NOx catalyst 217, and the air/fuel ratio of the exhaust gas is set back to substantially the stoichiometric air/fuel ratio. HC and CO, which can not be purged by the NOx catalyst 217 during the SOx poisoning restoration process, can be thereby oxidized by the oxidation catalyst 248 and thus purged.

As explained above, with the SOx poisoning restoration dedicated fuel adding nozzle 245 provided, the fuel added into the exhaust gas from the fuel adding nozzle 245 is prevented from flowing round into the intake system via the EGR pipe (EGR passageway), and it therefore never happens that the smoke is produced due to the SOx poisoning restoration process.

Moreover, if trying to add the fuel by use of the fuel adding nozzle 219 without providing the SOx poisoning restoration dedicated fuel adding nozzle 245 when in the SOx poisoning restoration process, the injection quantity increases when in the SOx poisoning restoration process, and hence a diameter of the injection hole of the fuel adding nozzle 219 has no alternative but to increase. If increased, there is a small quantity of fuel added from the fuel adding nozzle 219 in order to purge NOx when in a non SOx poisoning restoration process during the small load operation, and hence the fine particles of fuel and the vaporization thereof are sufficiently attained, resulting in a decrease in the NOx purging rate.

In this point, in the case of the seventh embodiment, the SOx poisoning restoration dedicated fuel adding nozzle 245 is provided, so that a requirement of the fuel adding nozzle 219 is only the capability of injecting a necessary quantity of fuel added for releasing and reducing NOx of the NOx catalyst 217. Accordingly, the diameter of the injection hole of the fuel adding nozzle 219 can be decreased. As a result, the fine particles of fuel added from the fuel adding nozzle 219 can be insufficiently attained during the small load operation, thereby enhancing the NOx purging rate.

FIG. 14 shows a SOx poisoning restoration control routine in the seventh embodiment. This SOx poisoning restoration control routine is previously stored in the ROM of the ECU 209 and repeatedly executed by the CPU.

### <Step 3001>

To start with, the ECU 209 judges in step 3001 whether or not it is the timing when the SOx poisoning restoration process is executed on the NOx catalyst 217. Herein, the timing when the SOx poisoning restoration process is executed on the NOx catalyst 217, may be, for instance, when a quantity of the fuel consumption reaches a predetermined value or when a mileage reaches a predetermined distance.

If judged to be negative in step 3001, the ECU 209 temporarily finishes the execution of this routine.

### <Step 3002>

If judged affirmative in step 3001, the ECU 209 proceeds to step 3002, and executes the temperature raising process and the SOx poisoning restoration process. To be specific, the ECU 209 opens the fuel control valve 247 and the air control valve 251, then adds the fuel from the fuel adding nozzle 245 and introduces the air into the exhaust pipe 216 disposed upstream of the oxidation catalyst 250. Note that an operation pattern of the aperture and the valve open time of each of the fuel control valve 247 and the air control valve 251, is previously stored as a two-dimensional map of the engine speed and the engine load in the ROM of the ECU 209.

### <Step 3003>

Next, the ECU 209 proceeds to step 3003, and judges whether or not the NOx catalyst is restored from the SOx poisoning. Herein, whether the NOx catalyst is restored from the SOx poisoning can be judged when, e.g. , the SOx poisoning restoration process continues for a predetermined period.

If judged negative in step 3003, the ECU 209 returns to step 3002 and continues to execute SOx poisoning restoration process.

If judged affirmative in step 3003, the ECU 209 temporarily finishes this routine.

Note that the respective embodiments discussed above involve the application of the system architecture in which some of the fuel pumped up by the fuel pump (11, 121) is add-supplied into the exhaust system by use of the fuel pump (11, 212) for supplying the fuel to the pressure accumulation chamber (12, 211) from the fuel tank. The present invention is not, however, limited to this system architecture and may be applied to such a system architecture that, e.g., the fuel tank or other fuel (reducer) supply source supplies the fuel (reducer) to be added.

Further, in accordance with the respective embodiments discussed above, the control valve (16, 222) controls the pressure of the fuel supplied via the added fuel passageway in order to add the fuel into the exhaust system, and, based on this pressure control, the operation of opening and closing the fuel adding nozzle (17, 219) is controlled. In this respect, an electromagnetically driven type injection valve controlled to open and close directly based on a command signal given from the ECU 80 may also be applied as an injection valve for adding the fuel.

Moreover, the exhaust emission control system of the present invention is applied to the straight four-cylinder diesel engine 100 as the internal combustion engine in each of the embodiments discussed above, however, the present invention can be preferably applied also to a gasoline engine that performs a lean combustion. Further, the present invention is not limited to the straight four-cylinder internal combustion engine and can be applied to internal combustion engines with different numbers of cylinders mounted therein.

A fuel adding nozzle 17 is embedded including its front end member 17c into an internal wall of an exhaust port 40a formed within a cylinder head 100a. An injection passageway 101c guides, into the exhaust port 40a, the fuel jetted out of the front end member 17c of the fuel adding nozzle 17. A wall 102 provided between the front end member 17c and the exhaust port 40a decreases a heat receiving quantity of the fuel adding nozzle 17. A water jacket 110 is proximal to an outer edge of a nozzle seat 103, thereby efficiently transferring the heat contained in a gasket 17d to cooling water in the water jacket 110.

## Claims

1. An exhaust emission control system of an internal combustion engine (100; 200); comprising:
an exhaust manifold (40; 214) connected to an exhaust port (40a) of each of cylinders of a multi-cylinder internal combustion engine (100; 200) capable of a lean combustion, wherein a first and a last cylinder of the internal combustion engine are spaced apart from each other most with respect to the remaining cylinders;
an exhaust gas converging pipe (215) for connecting said exhaust manifold (40; 214) to an exhaust pipe (216);
an exhaust gas recirculation device (60, 62, 61; 223, 224, 225) for recirculating a part of exhaust gas to an intake system (30; 202, 203) by connecting said exhaust manifold (40; 214) to said intake system (30; 202, 203) of said internal combustion engine (100; 200);
a NOx catalyst (41; 217) provided in said exhaust pipe (216); and
a reducer injection nozzle (17; 219) for injecting a reducer into an exhaust system disposed more upstream than said NOx catalyst (41; 217), wherein
an injecting port (17a) of said reducer injection nozzle (17; 219) is provided facing to said exhaust port (40a) of said first cylinder positioned in close proximity to said one end of said exhaust manifold (40; 214) next to said first cylinder, and an exhaust gas intake port (60; 223) of said exhaust gas recirculation device (60, 62, 61; 223, 224, 225) is provided on the side of the other end of said exhaust manifold (40: 214) next to said last cylinder **characterized in that**
an upstream end of said exhaust gas converging pipe (215) is connected to one end of said exhaust manifold (40; 214) next to said first cylinder.

2. An exhaust emission control system of an internal combustion engine (100; 200) according to claim 1, wherein said exhaust port (40a) of said cylinder fitted with an injecting portion of said reducer injection nozzle (17; 219) narrows down in section at a portion provided with the injection port (17a).

3. An exhaust emission control system of an internal combustion engine (100; 200) according to claim 1, wherein the reducer is injected from said injecting portion of said reducer injection nozzle (17; 219) during a valve open period of said exhaust valve of said cylinder positioned in close proximity to said one end of said exhaust manifold (40; 214).

4. An exhaust emission control system of an internal combustion engine (100; 200) according to claim 1 or 3, wherein as far as said cylinder fitted with the injecting port (17a) of said reducer injection nozzle (17; 219) is concerned, after executing a main injection for injecting the fuel in order to obtain an engine output from a fuel injection valve (210), there is executed an auxiliary injection for injecting the fuel from said fuel injection valve (210) at an expansion stroke or an exhaust stroke.

5. An exhaust emission control system of an internal combustion engine (100; 200) according to claim 1, further comprising:
a turbocharger (50; 206), provided downstream of said exhaust gas converging pipe (215), for pressurizing a suction air; and
a bypass passageway (240) for guiding the exhaust gas to said NOx catalyst (41; 217) so as to bypass said turbocharger (50) when under a small load and when said reducer injection nozzle (17; 219) injects the reducer.

6. An exhaust emission control system of an internal combustion engine (100; 200) according to claim 5, wherein a catalyst (241) having an oxidizing function is provided in said bypass passageway (240).

7. An exhaust emission control system of an internal combustion engine (100; 200) according to claim 1, wherein a second reducer injection nozzle (245) for supplying the reducer to said NOx catalyst (41; 217) when restoring said NOx catalyst (41; 217) from sulfur poisoning, is provided upstream of said NOx catalyst (41; 217).

8. An exhaust emission control system of an internal combustion engine (100; 200) according to claim 1, which is provided in an cylinder head (100a) formed with said exhaust port (40a) of said internal combustion engine (100; 200) and having said reducer injection nozzle (17; 219), said system further comprising:
temperature rise restraining means (102, 17d, 110; 17k, 17d, 110; 102, 17d, 110, 111) for restraining a rise in temperature of a passageway (101c, 17h), for the reducer (17), formed extending throughout an interior of said reducer injection nozzle (17; 219) from said injection port (17a) thereof.

9. An exhaust emission control system of an internal combustion engine (100; 200) according to claim 8, wherein said temperature rise restraining means (102, 17d, 110; 17k, 17d, 110; 102, 17d, 110, 111) includes a structural member (102) forming a part of said cylinder head (100a), covering at least a part of exposed portion of said reducer injection nozzle (17; 219) to said exhaust port (40a), and configuring a passageway communicating with between the injection port (17a) of said reducer injection nozzle (17; 219) and said exhaust port (40a).

10. An exhaust emission control system of an internal combustion engine (100; 200) according to claim 8, wherein at least a part of said temperature rise restraining means (102, 17d, 110; 17k, 17d, 110; 102, 17d, 110, 111) is composed of a material exhibiting a higher coefficient of thermal conductivity than a material of said outer shell member (100a) forming said exhaust port (40a), and covers at least a part of the outer surface of said reducer injection nozzle (17; 219).

11. An exhaust emission control system of an internal combustion engine (100; 200) according to claim 8 or 10, wherein said temperature rise restraining means (102, 17d, 110; 17k, 17d, 110; 102, 17d, 110, 111) includes a passageway (110) for a cooling medium in the vicinity of a portion composed of a material exhibiting a higher coefficient of thermal conductivity than that of the material of said cylinder head (100a) forming said exhaust port (40a), and
the cooling medium absorbs the heat contained in the portion composed of the material exhibiting the higher coefficient of thermal conductivity.

12. An exhaust emission control system of an internal combustion engine (100; 200) according to any one of claims 9 to 11, wherein said temperature rise restraining means (102, 17d, 110; 17k, 17d, 110; 102, 17d, 110, 111) includes a passageway (111) for the cooling medium, formed in such a way that a part of outer peripheral surface of said reducer injection nozzle (17; 219) configures a part of an internal wall (105) of the passageway (111) .

## Patentansprüche

1. Abgasemissionssteuersystem einer Brennkraftmaschine (100; 200) mit:
einem Auslasskrümmer (40; 214), der mit einem Auslassanschluss (40a) von jedem von Zylindern eines Mehrzylinderverbrennungsmotors (100; 200) verbunden ist, der zu einer mageren Verbrennung fähig ist, wobei ein erster und ein letzter Zylinder des Verbrennungsmotors voneinander am weitesten mit Bezug auf die übrigen Zylinder beabstandet sind;
einem Abgaszusammenführungsrohr (215) zum Verbinden des Auslasskrümmers (40; 214) zu einem Abgasrohr (216);
einer Abgasrezirkulationsvorrichtung (60, 62, 61; 223, 224, 225) zum Rezirkulieren eines Teils des Abgases zu einem Einlasssystem (30; 202, 203) durch Verbinden des Auslasskrümmers (40; 214) mit dem Einlasssystem (30; 202, 203) des Verbrennungsmotors (100; 200);
einem NOx-Katalysator (41; 217), der in dem Abgasrohr (216) vorgesehen ist; und
einer Reduktionsmitteleinspritzdüse (17; 219) zum Einspritzen eines Reduktionsmittels in ein Abgassystem, die weiter stromaufwärts als der NOx-Katalysator (41; 217) angeordnet ist, wobei
ein Einspritzanschluss (17a) der Reduktionsmitteleinspritzdüse (17; 219) zu dem Auslassanschluss (40a) des ersten Zylinders weisend vorgesehen ist, der in nächster Nähe zu dem einen Ende des Auslasskrümmers (40; 214) neben dem ersten Zylinder positioniert ist, und
wobei ein Abgaseinlassanschluss (60; 223) der Abgasrezirkulationsvorrichtung (60, 62, 61; 223, 224, 225) an der Seite des anderen Endes des Auslasskrümmers (40; 214) neben dem letzten Zylinder vorgesehen ist,
**dadurch gekennzeichnet, dass**
ein stromaufwärtiges Ende des Abgaszusammenführungsrohres (215) mit einem Ende des Auslasskrümmers (40; 214) neben dem ersten Zylinder verbunden ist.

2. Abgasemissionssteuersystem eines Verbrennungsmotors (100; 200) gemäß Anspruch 1, wobei der Auslassanschluss (40a) des Zylinders, der mit einem Einspritzabschnitt der Reduktionsmitteleinspritzdüse (17; 219) angepasst ist, sich nach unten im Schnitt an einem Abschnitt verengt, der mit dem Einspritzabschnitt (17a) vorgesehen ist.

3. Abgasemissionssteuersystem eines Verbrennungsmotors (100; 200) gemäß Anspruch 1, wobei das Reduktionsmittel aus dem Einspritzabschnitt der Reduktionsmitteleinspritzdüse (17; 219) während einer Ventilöffnungsdauer des Auslassventils des Zylinders eingespritzt wird, der in nächster Nähe zu dem einen Ende des Auslasskrümmers (40; 214) positioniert ist.

4. Abgasemissionssteuersystem eines Verbrennungsmotors (100; 200) gemäß Anspruch 1 oder 3, wobei bezüglich des Zylinders, der mit dem Einspritzanschluss (17a) der Reduktionsmitteleinspritzdüse (17; 219) angepasst ist, nach dem Ausführen einer Haupteinspritzung zum Einspritzen des Kraftstoffs zum Erhalten einer Verbrennungsmotorabgabe aus einem Kraftstoffeinspritzventil (210) eine Hilfseinspritzung zum Einspritzen des Kraftstoffs aus dem Kraftstoffeinspritzventil (210) bei einem Expansionstakt oder einem Auslasstakt ausgeführt wird.

5. Abgasemissionssteuersystem einer Brennkraftmaschine (100; 200) gemäß Anspruch 1, des weiteren mit:
einem Turbolader (50; 206), der stromabwärts von dem Abgaszusammenführungsrohr (215) vorgesehen ist zum Druckbeaufschlagen von Ansaugluft; und
einem Umgehungsweg (240) zum Führen des Abgases zu dem NOx-Katalysator (41; 217), um den Turbolader (50) zu umgehen, wenn eine kleine Last vorliegt und wenn die Reduktionsmitteleinspritzdüse (17; 219) das Reduktionsmittel einspritzt.

6. Abgasemissionssteuersystem einer Brennkraftmaschine (100; 200) gemäß Anspruch 5, wobei ein Katalysator (241), der eine Oxidationsfunktion hat, in dem Umgehungsweg (240) vorgesehen ist.

7. Abgasemissionssteuersystem eines Verbrennungsmotors (100; 200) gemäß Anspruch 1, wobei eine zweite Reduktionsmitteleinspritzdüse (245) zum Zuführen des Reduktionsmittels zu dem NOx-Katalysator (41; 217), wenn der NOx-Katalysator (41; 217) von einer Schwefelvergiftung wiederhergestellt wird, stromaufwärts von dem NOx-Katalysator (41; 217) vorgesehen ist.

8. Abgasemissionssteuersystem eines Verbrennungsmotors (100; 200) gemäß Anspruch 1, das an einem Zylinderkopf (100a) ausgebildet ist, der mit dem Auslassanschluss (40a) der Brennkraftmaschine (100; 200) ausgebildet ist und die Reduktionsmitteleinspritzdüse (17; 219) hat, wobei das System des weiteren Folgendes aufweist:
eine Temperaturanstiegsbeschränkungseinrichtung (102, 17d, 110; 17k, 17d, 110; 102, 17d, 110, 111) zum Begrenzen eines Anstiegs der Temperatur eines Durchgangswegs (101c, 17h) für das Reduktionsmittel, der so ausgebildet ist, dass er sich durch ein Inneres der Reduktionsmitteleinspritzdüse (17; 219) von deren Einspritzanschluss (17a) erstreckt.

9. Abgasemissionssteuersystem eines Verbrennungsmotors (100; 200) gemäß Anspruch 8, wobei die Temperaturanstiegsbegrenzungseinrichtung (102, 17d, 110; 17k, 17d, 110; 102, 17d, 110, 111) ein Strukturelement (102) aufweist, das einen Teil des Zylinderkopfs (100a) ausbildet, das zumindest einen Teil eines freigelegten Abschnitts der Reduktionsmitteleinspritzdüse (17; 219) abdeckt, für den Auslassanschluss (40a), und das einen Durchgangsweg bildet, der zwischen dem Einspritzanschluss (17a) der Reduktionsmitteleinspritzdüse (17; 219) und dem Auslassanschluss (40a) verbindet.

10. Abgasemissionssteuersystem eines Verbrennungsmotors (100; 200) gemäß Anspruch 8, wobei zumindest ein Teil der Temperaturanstiegsbegrenzungseinrichtung (102, 17d, 110; 17k, 17d, 110; 102, 17d, 110, 111) aus einem Werkstoff besteht, der einen höheren thermischen Leitfähigkeitskoeffizienten aufweist als ein Werkstoff des Außenhüllenelementes (100a), das den Auslassanschluss (40a) ausbildet, und zumindest einen Teil der äußeren Fläche der Reduktionsmitteleinspritzdüse (17; 219) abdeckt.

11. Abgasemissionssteuersystem eines Verbrennungsmotors (100; 200) gemäß Anspruch 8 oder 10, wobei die Temperaturanstiegsbegrenzungseinrichtung (102, 17d, 110; 17k, 17d, 110; 102, 17d, 110, 111) einen Durchgangsweg (110) für ein Kühlmedium in der Umgebung eines Abschnitts aufweist, der aus einem Werkstoff besteht, der einen höheren thermischen Leitfähigkeitskoeffizienten aufweist als derjenige des Werkstoffs des Zylinderkopfs (100a), das den Auslassanschluss (40a) ausbildet,
wobei das Kühlmedium die Wärme aufnimmt, die in dem Abschnitt enthalten ist, der aus dem Werkstoff besteht, das den höheren thermischen Leitfähigkeitskoeffizienten aufweist.

12. Abgasemissionssteuersystem eines Verbrennungsmotors (100; 200) gemäß einem der Ansprüche 9 bis 11, wobei die Temperaturanstiegsbegrenzungseinrichtung (102, 17d, 110; 17k, 17d, 110; 102, 17d, 110, 111) einen Durchgangsweg (111) für das Kühlmedium aufweist, der derart ausgebildet ist, dass ein Teil einer äußeren Umfangsfläche der Reduktionsmitteleinspritzdüse (17; 219) einen Teil einer Innenwand (105) des Durchgangswegs (111) bildet.

## Revendications

1. Système de commande des émissions d'échappement d'un moteur à combustion interne (100 ; 200), comprenant :
un collecteur d'échappement (40 ; 214) raccordé à un orifice d'échappement (40a) de chacun des cylindres d'un moteur à combustion interne polycylindrique (100 ; 200) capable d'une combustion pauvre, dans lequel un premier et un dernier cylindres du moteur à combustion interne sont les plus espacés l'un de l'autre par rapport aux cylindres restants ;
un tuyau de convergence des gaz d'échappement (215) destiné à raccorder ledit collecteur d'échappement (40 ; 214) à un tuyau d'échappement (216) ;
un dispositif de recirculation des gaz d'échappement (60, 62, 61 ; 223, 224, 225) destiné à faire recirculer une partie des gaz d'échappement vers un système d'admission (30 ; 202, 203) en raccordant ledit collecteur d'échappement (40 ; 214) audit système d'admission (30 ; 202, 203) dudit moteur à combustion interne (100 ; 200) ;
un catalyseur NOx (41 ; 217) prévu dans ledit tuyau d'échappement (216) ; et
une buse d'injection d'agent de réduction (17 ; 219) destinée à injecter un agent de réduction dans un système d'échappement disposé davantage en aval que ledit catalyseur de NOx (41 ; 217), dans lequel
un orifice d'injection (17a) de ladite buse d'injection d'agent de réduction (17 ; 219) est prévu en regard dudit orifice d'échappement (40a) dudit premier cylindre positionné très proche de ladite extrémité dudit collecteur d'échappement (40 ; 214) à côté dudit premier cylindre, et
un orifice d'admission des gaz d'échappement (60 ; 223) dudit dispositif de recirculation des gaz d'échappement (60, 62, 61 ; 223, 224, 225) est prévu du côté de l'autre extrémité dudit collecteur d'échappement (40 ; 214) près dudit dernier cylindre,
**caractérisé en ce que**
une extrémité amont dudit tuyau de convergence des gaz d'échappement (215) est raccordé à une extrémité dudit collecteur d'échappement (40 ; 214) près dudit premier cylindre.

2. Système de commande des émissions d'échappement d'un moteur à combustion interne (100 ; 200) selon la revendication 1, dans lequel la section dudit orifice d'échappement (40a) dudit cylindre ajusté avec une partie d'injection de ladite buse d'injection d'agent de réduction (17 ; 219) se rétrécit au niveau d'une partie munie de l'orifice d'injection (17a).

3. Système de commande des émissions d'échappement d'un moteur à combustion interne (100 ; 200) selon la revendication 1, dans lequel l'agent de réduction est injecté depuis ladite partie d'injection de ladite buse d'injection d'agent de réduction (17 ; 219) pendant une période d'ouverture de soupape de ladite soupape d'échappement dudit cylindre positionné le plus proche de ladite extrémité dudit collecteur d'échappement (40 ; 214).

4. Système de commande des émissions d'échappement d'un moteur à combustion interne (100 ; 200) selon la revendication 1 ou 3, dans lequel jusqu'à ce que ledit cylindre ajusté avec l'orifice d'injection (17a) de ladite buse d'injection d'agent de réduction (17 ; 219) soit concerné, après l'exécution d'une injection principale destinée à injecter le carburant afin d'obtenir une sortie de moteur à partir d'une soupape d'injection de carburant (210), une injection secondaire est exécutée laquelle est destinée à injecter le carburant depuis ladite soupape d'injection de carburant (210) au moment d'une course de combustion ou d'une course d'échappement.

5. Système de commande des émissions d'échappement d'un moteur à combustion interne (100 ; 200), selon la revendication 1, comprenant de plus :
un compresseur volumétrique (50 ; 206), prévu en aval dudit tuyau de convergence des gaz d'échappement (215), destiné à mettre sous pression un air d'aspiration ; et
une voie de passage de dérivation (240) destinée à guider les gaz d'échappement vers ledit catalyseur de NOx (41 ; 217) de façon à contourner ledit compresseur volumétrique (50) lorsqu'il se trouve sous une faible charge et lorsque ladite buse d'injection d'agent de réduction (17 ; 219) injecte l'agent de réduction.

6. Système de commande des émissions d'échappement d'un moteur à combustion interne (100 ; 200) selon la revendication 5, dans lequel un catalyseur (241) possédant une fonction d'oxydation est prévu dans ladite voie de passage de dérivation (240).

7. Système de commande des émissions d'échappement d'un moteur à combustion interne (100 ; 200) selon la revendication 1, dans lequel une deuxième buse d'injection d'agent de réduction (245) destinée à délivrer l'agent de réduction vers ledit catalyseur de NOx (41 ; 217) lors de la régénération dudit catalyseur de NOx (41 ; 217) suite à un empoisonnement au soufre, est prévue en amont dudit catalyseur de NOx (41 ; 217).

8. Système de commande des émissions d'échappement d'un moteur à combustion interne (100 ; 200) selon la revendication 1, qui est prévu dans une culasse (100a) formée avec ledit orifice d'échappement (40a) dudit moteur à combustion interne (100 ; 200) et comportant ladite buse d'injection d'agent de réduction (17 ; 219), ledit système comprenant de plus :
un moyen de limitation d'élévation de température (102, 17d, 110 ; 17k, 17d, 110 ; 102, 17d, 110, 111) destiné à limiter une élévation de la température d'une voie de passage (101c, 17h), pour l'agent de réduction (17), formée en s'étendant tout le long de l'intérieur de ladite buse d'injection d'agent de réduction (17 ; 219) depuis ledit orifice d'injection (17a) de celle-ci.

9. Système de commande des émissions d'échappement d'un moteur à combustion interne (100 ; 200) selon la revendication 8, dans lequel ledit moyen de limitation d'élévation de température (102, 17d, 110 ; 17k, 17d, 110 ; 102, 17d, 110, 111) comprend un élément de structure (102) formant une partie de ladite culasse (100a), couvrant au moins une partie d'une partie exposée de ladite buse d'injection d'agent de réduction (17 ; 219) sur ledit orifice d'échappement (40a), et configurant une voie de passage établissant la communication entre l'orifice d'injection (17a) de ladite buse d'injection d'agent de réduction (17 ; 219) et ledit orifice d'échappement (40a).

10. Système de commande des émissions d'échappement d'un moteur à combustion interne (100 ; 200) selon la revendication 8, dans lequel au moins une partie dudit moyen de limitation d'élévation de température (102, 17d, 110 ; 17k, 17d, 110 ; 102, 17d, 110, 111) est composée d'un matériau montrant un coefficient de conductivité thermique plus élevé qu'un matériau dudit élément de carcasse externe (100a) formant ledit orifice d'échappement (40a), et couvre au moins une partie de la surface externe de ladite buse d'injection d'agent de réduction (17 ; 219).

11. Système de commande des émissions d'échappement d'un moteur à combustion interne (100 ; 200) selon la revendication 8 ou 10, dans lequel ledit moyen de limitation d'élévation de température (102, 17d, 110 ; 17k, 17d, 110 ; 102, 17d, 110, 111) comprend une voie de passage (110) pour un agent de refroidissement au voisinage d'une partie composée d'un matériau montrant un coefficient de conductivité thermique plus élevé que celui du matériau de ladite culasse (100a) formant ledit orifice d'échappement (40a), et
l'agent de refroidissement absorbe la chaleur contenue dans la partie composée du matériau montrant le coefficient de conductivité thermique plus élevé.

12. Système de commande des émissions d'échappement d'un moteur à combustion interne (100 ; 200) selon l'une quelconque des revendications 9 à 11, dans lequel ledit moyen de limitation d'élévation de température (102, 17d, 110 ; 17k, 17d, 110 ; 102, 17d, 110, 111) comprend une voie de passage (111) pour l'agent de refroidissement, formée d'une manière telle qu'une partie de la surface périphérique externe de ladite buse d'injection d'agent de réduction (17 ; 219) configure une partie d'une paroi interne (105) de la voie de passage (111).
